# EUROPÄISCHE PATENTSCHRIFT

(11) **EP 2 580 622 B1**
(45) Veröffentlichungstag und Bekanntmachung des Hinweises auf die Patenterteilung: **03.01.2018**
(21) Anmeldenummer: 11723056.5
(22) Anmeldetag: 31.05.2011
(51) Int. Cl.: G03B 11/04, G03B 17/04, G03B 29/00, B60R 11/04, H04N 5/225, B60R 11/00, H04N 7/18

(54) **VORRICHTUNG MIT EINER KAMERAEINHEIT FÜR KRAFTFAHRZEUGE**
DEVICE WITH A CAMERA UNIT FOR MOTOR VEHICLES
DISPOSITIF AVEC UNE UNITÉ DE CAMÉRA POUR VÉHICULE AUTOMOBILE

(30) Priorität: 11.06.2010 US 354151 P
(43) Veröffentlichungstag der Anmeldung: 17.04.2013
(60) Teilanmeldung: 12198803.4
(73) Patentinhaber: Huf Hülsbeck & Fürst GmbH & Co. KG, 42551 Velbert (DE)
(72) Erfinder: SCUDDER, Austen, Kolar, Verona, Wisconsin 53593 (US); WALTERS, Alex, Scott, Butler, Wisconsin 53007-1404 (US); FICHERT, Ulrike, 42113 Wuppertal (DE); BARTLETT, Shannon, Christian, Cedarburg, Wisconsin 53012 (US); JUNGMANN, Richard, Heinz, Richfield, Wisconsin 53076 (US)
(74) Vertreter: Vogel, Andreas
(86) Internationale Anmeldenummer: PCT/EP2011/058948
(87) Internationale Veröffentlichungsnummer: WO 2011/154290

(56) Entgegenhaltungen:
- EP-A1- 1 003 068
- EP-A2- 1 332 923
- WO-A1-2010/091657
- WO-A1-2011/086132
- DE-A1-102006 048 373
- DE-A1-102009 008 283
- DE-A1-102009 039 962
- DE-U1-202005 017 430
- US-A1- 2004 130 622
- US-A1- 2006 256 459
- US-A1- 2007 013 555
- US-A1- 2008 079 848

## Beschreibung

Die Erfindung betrifft eine Vorrichtung mit einer Kameraeinheit, die zur Bilderfassung des Außenbereiches eines Kraftfahrzeuges dient, und einem Deckelelement, das über einen Antrieb von einer Schließstellung in eine Offenstellung bewegbar ist, wobei in der Schließstellung des Deckelelementes die Kameraeinheit von außen unzugänglich sich hinter dem Deckelelement befindet und in der Offenstellung des Deckelelementes die Bilderfassung durchführbar ist.

Ferner betrifft die Erfindung ein Verfahren zur Befestigung derselben Vorrichtung mit einer Kameraeinheit sowie eine Vorrichtung als Montagegruppe mit einer Kameraeinheit. Zudem bezieht sich die Erfindung auf eine Vorrichtung mit einem Montageelement und einer Abdeckung nach dem Oberbegriff von Anspruch 49, die gemeinsam ein Gehäuse, insbesondere für eine Kameraeinheit, bilden, wobei innerhalb des Gehäuses zumindest ein Bauteil, insbesondere ein Bestandteil eines Antriebs, angeordnet ist.

In der EP 1 003 068 B1 ist eine Kameraeinheit zur Bilderfassung des Außenbereiches eines Kraftfahrzeuges beschrieben. Hierbei ist ein Deckelelement vorgesehen, welches von einer Schließstellung in einer Offenstellung und umgekehrt über einen Antrieb bewegt werden kann. Nachteiligerweise hat sich gezeigt, dass ein derartiger Verschlussmechanismus für die Bewegung des Deckelelements in seine jeweilige Stellung platzaufwendig ist. Ferner hat sich gezeigt, dass der Montageaufwand einer derartigen Vorrichtung mit einer Kameraeinheit für den Monteur hoch ist.

Eine der Aufgaben dieser Erfindung ist es, eine platzsparende und kompakte Vorrichtung der genannten Art zu schaffen.

Die Aufgabe wird durch sämtliche Merkmale des Patentanspruches 1 gelöst. In den abhängigen Ansprüchen 2 bis 16 sind mögliche Ausführungsformen der erfindungsgemäßen Vorrichtung beschrieben.

Erfindungsgemäß ist vorgesehen, dass das Deckelelement eine der Kameraeinheit abgewandte Außenfläche aufweist und der Antrieb mit einem derartigen Mechanismus zusammenwirkt, dass während der Bewegung des Deckelelements zwischen der Schließstellung und der Offenstellung die Außenfläche in jeder Stellung des Deckelelementes stets sich im Außenbereich des Kraftfahrzeuges befindet. Da die Außenfläche des Deckelelementes während seiner Bewegung in die jeweilige Stellung stets sich außerhalb der Kraftfahrzeugkarosserie im Außenbereich des Kraftfahrzeuges verbleibt und nicht wie im Stand der Technik in die Kraftfahrzeugkarosserie hinein verschwenkt wird, kann eine sehr kompakte und platzsparende Vorrichtung geschaffen werden. Der Antrieb mit dem Mechanismus zur Bewegung des Deckelelementes benötigt wenig Platz und wenig Bauraum innerhalb des Kraftfahrzeuges. Besonders vorteilhaft kann sein, eine derartige Vorrichtung im hinteren Bereich von Pickups-Kraftfahrzeugen einzusetzen, die spezieli nur wenig Bauraum zur Montage einer derartigen Vorrichtung bieten. Selbstverständlich ist eine derartige erfindungsgemäße Vorrichtung in sämtliche Kraftfahrzeuge einsetzbar. Ein weiterer Vorteil dieser Erfindung ist, dass die Außenfläche des Deckelelementes eine Beschriftung, insbesondere ein Emblem, eine Marke, eine Zeichnung aufweisen kann, die in jeder Stellung des Deckelelementes stets sichtbar für eine Person ist, die sich im Außenbereich des Kraftfahrzeuges befindet. Hierdurch kann eine Werbewirkung über das Deckelelement erhöht werden.
Eine weitere Möglichkeit ist es, die Montage einer Vorrichtung mit einer Kameraeinheit an ein Karosserieteil des Kraftfahrzeuges zu vereinfachen.

Es kann vorgesehen sein, dass die Vorrichtung als Montagegruppe ausgeführt ist, die an einem Karosserieteil eines Kraftfahrzeuges befestigbar ist und ein Montageelement aufweist, an dem folgende Elemente getragen sind: eine Kameraeinheit, die zur Bilderfassung des Außenbereiches eines Kraftfahrzeuges dient, ein Antrieb, der mit einem Deckelelement in Wirkverbindung steht, wobei das Deckelelement durch den Antrieb zwischen einer Schließstellung und einer Offenstellung bewegbar ist, wobei in der Schließstellung des Deckelelementes die Kameraeinheit von außen unzugänglich sich hinter dem Deckelelement befindet und in der Offenstellung des Deckelelementes die Bilderfassung durchführbar ist, und das Montageelement zumindest ein Befestigungsmittel aufweist, womit das Montageelement außenseitig am Karosserieteil des Kraftfahrzeuges befestigbar ist. Die Vorrichtung als Montagegruppe ist derart vorkonfektioniert, dass alle wesentlichen Elemente, wie Kameraeinheit, Antrieb einschließlich Deckelelement, an der Montagegruppe bereits befestigt sind. Zudem weist das Montageelement das entsprechende Befestigungsmittel auf, um die Montagegruppe außenseitig am Karosserieteil des Kraftfahrzeuges zu befestigen. Hierfür weist vorteilhafterweise das Karosserieteil entsprechende Gegenbefestigungsmittel auf, die mit dem Befestigungsmittel des Montageelementes zusammenwirken.
Eine weitere Möglichkeit ist es, ein Montageverfahren für eine Vorrichtung mit Kameraeinheit zu schaffen, bei dem der Monteur möglichst mit geringem Aufwand die Vorrichtung mit Kameraeinheit am Kraftfahrzeug befestigen kann.
Es kann vorgesehen sein, dass das Verfahren zur Befestigung einer Vorrichtung an einem Karosserieteil eines Kraftfahrzeugs ein Montageelement vorsieht, an dem folgende Elemente getragen werden: eine Kameraeinheit, die zur Bilderfassung des Außenbereiches eines Kraftfahrzeuges dient, ein Antrieb, der mit einem Deckelelement in Wirkverbindung steht, wobei das Deckelelement durch den Antrieb zwischen einer. Schließstellung und einer Offenstellung bewegbar ist, wobei in der Schließstellung des Deckelelementes die Kameraeinheit von außen unzugänglich sich hinter dem Deckelelement befindet und in der Offenstellung des Deckelelementes die Bilderfassung durchführbar ist, und das Montageelement zumindest ein Befestigungsmittel aufweist, womit die Vorrichtung von Außen an dem Karosserieteil des Kraftfahrzeuges befestigt wird. Der besondere Vorteil dieses Verfahrens zur Befestigung der erfindungsgemäßen Vorrichtung ist, dass der Monteur lediglich das Montageelement von Außen an das jeweilige Karosserieteil des Kraftfahrzeuges befestigen kann, ohne weitere Montageschritte vornehmen zu müssen, die innenseitig des Kraftfahrzeuges auszuführen sind. Zusammenfassend lässt sich hierbei herausstellen, dass lediglich ein Verfahrensschritt zur Befestigung der erfindungsgemäßen Vorrichtung notwendig ist, nämlich das Aufsetzen des Montageelementes an das Karosserieteil des Kraftfahrzeugs, wobei gleichzeitig die Befestigungsmittel am Montageelement dafür sorgen, dass die erfindungsgemäße Vorrichtung mit ihrer Kameraeinheit zuverlässig am Karosserieteil gehalten wird. Das Montageelement kann mit sämtlichen Elementen, wie Kameraeinheit, Antrieb einschließlich Deckelelement vorkonfektioniert sein, so dass der Werker lediglich an der definierten Stelle am Kraftfahrzeug das vorkonfektionierte Montageelement befestigen muss. Selbstverständlich ist es denkbar, dass eine vollautomatische Befestigung des vorkonfektionierten M6ritageelementes am Karosserieteil des Kraftfahrzeuges durchgeführt wird, beispielsweise über einen Roboter oder über eine ähnlich arbeitende Maschine.

Ferner ist es eine weitere Möglichkeit, eine Vorrichtung mit einem Gehäuse, insbesondere für eine Kameraeinheit und/oder ein Betätigungselement zu schaffen, die einen einfachen und insbesondere werkzeuglosen Zusammenbau ermöglicht. Zusätzlich soll diese Vorrichtung aus möglichst wenigen Bauteilen bestehen.

Bei der Vorrichtung kann es vorgesehen sein, dass eine Lagerung des Bauteils einerseits in dem Montageelement und andererseits in der Abdeckung erfolgt. Bei diesem Bauteil kann es sich um ein bewegliches oder drehbares Bauteil handeln oder um ein unbewegliches bzw. starres Bauteil handeln, was innerhalb des Gehäuses angeordnet ist. Diese Bauteile bilden insbesondere ein Bestandteil eines Antriebes, der z. B. für ein Deckelelement der Kameraeinheit benötigt wird. Der Zusammenbau der erfindungsgemäßen Vorrichtung erfolgt dadurch, dass die Bauteile in ihrer Lagerung im Montageelement gelegt werden und anschließend eine ortsfeste Fixierung der Bauteile durch das Zusammenfügen des Montageelementes mit der Abdeckung ohne einen zusätzlichen Schritt erfolgt. Hierfür sind ebenfalls in der Abdeckung, genauso wie in dem Montageelement, ein Teil der Lagerung für die in Rede stehenden Bauteile vorgesehen. Somit können auf zusätzliche Halte- oder Befestigungselemente innerhalb des Gehäuses verzichtet werden, um die Bauteile ortsfest im Gehäuse anzuordnen. Folglich ist ein einfacher und ggf. werkzeugloser Zusammenbau der Vorrichtung mit ihren Bauteilen möglich. Hierbei kann insbesondere auf ein Montagewerkzeug verzichtet werden, da die Bauteile nur von Hand in die jeweils dafür vorgesehenen Lagerungen im Montageelement eingelegt werden brauchen.

In einer möglichen Ausführungsform der Erfindung kann der Mechanismus zumindest eine Führungskontur und zumindest einen Schwenkarm aufweisen, wobei das Deckelelement rückseitig an der Führungskontur und am Schwenkarm befestigt ist, wobei insbesondere das Deckelelement rückseitig ein erstes Verbindungselement und/oder ein zweites Verbindungselement aufweist, wobei zumindest ein Verbindungselement bewegbar gelagert an der Führungskontur und/oder dem Schwenkarm ist.

Erfindungsgemäß ist vorgesehen, dass der Mechanismus derart ausgestaltet ist, dass während der Bewegung des Deckelelementes von der Schließstellung in die Offenstellung in einer ersten Bewegungsphase das Deckelelement vom Fahrzeug sich entfernt und gleichzeitig sich um mindestens eine Achse verschwenkt und in einer zweiten Bewegungsphase das Deckelelement zum Fahrzeug herangezogen wird und insbesondere gleichzeitig sich um zumindest eine Achse zurückverschwenkt. Hierbei ist es denkbar, dass die erste und die zweite Bewegungsphase sich zurück überlappen. Die beiden Bewegungsphasen können auch sequentiell zueinander erfolgen. In der Schließstellung befindet sich das Deckelelement unmittelbar an der Fahrzeugkarosserie des Kraftfahrzeuges. Vorteilhafterweise kann das Deckelelement rückseitig die Karosserie des Kraftfahrzeuges in seiner Schließstellung kontaktieren. Rückseitig des Deckelelementes ist zumindest eine Dichtung denkbar, die in der Schließstellung des Deckelelementes die Fahrzeugkarosserie kontaktiert. Somit kann die Kameraeinheit sowie der Antrieb mit seinem Mechanismus wirksam vor Feuchtigkeit, Staub, Schmutz etc. geschützt werden. Vorteilhafterweise ist der Schwenkarm an einer ersten Achse am Deckelelement, insbesondere am ersten Verbindungselement des Deckelelements, angelenkt. Ebenfalls kann vorgesehen sein, dass eine zweite Achse vorgesehen ist, um die das Deckelelement, insbesondere das zweite Verbindungselement des Deckelelementes sich verschwenken kann, während der Antrieb zur Bewegung des Deckelelementes aktiviert ist. Hierbei verfährt die zweite Achse entlang der Führungskontur, wobei das zweite Verbindungselement zum einen entlang der Führungskontur verfahren wird und zum anderen eine Schwenkbewegung um die zweite Achse des Deckelelementes erfolgt.

Erfindungsgemäß kann vorgesehen sein, dass die Führungskontur linearförmig und/oder zumindest bereichsweise bogenförmig ist. Zweckmäßigerweise kann die linear verlaufende Führungskontur einen Winkel β zur Außenkarosserie des Kraftfahrzeuges aufweisen, an der die Vorrichtung angebracht ist, wobei der Winkel β zwischen 1 ° ::; β <_ 45°, insbesondere zwischen 10° s β <_ 35° liegt. Durch die besondere Ausgestaltung des Winkels β kann eine kompakte Gesamtanordnung der Vorrichtung geschaffen werden, wobei gleichzeitig der Schwenkbereich des Deckelelementes zwischen seiner Schließstellung und der Offenstellung möglichst dicht an der Karosserie des Kraftfahrzeuges verbleibt. Die zweite Achse, um die sich das Deckelelement während seiner Bewegung verschwenkt, kann gleichzeitig entlang der linearen Führungskontur sich verfahren. Besonders vorteilhaft in einer möglichen Ausführungsform der Erfindung ist, dass sowohl in der Schließstellung als auch in der Offenstellung die Außenfläche des Deckelelements im Wesentlichen vertikal zur Fahrzeugkarosserie ausgerichtet ist. Hierbei kann die Außenfläche des Deckelelementes diverse Konturen aufweisen. Denkbar ist beispielsweise, dass die Außenfläche im Wesentlichen parallel zur Karosserieoberfläche ausgerichtet ist. Ebenfalls ist es denkbar, dass die Außenfläche gewölbt ausgeführt ist. Ein besonderer Vorteil der Erfindung ist, dass in beiden Stellungen des Deckelelementes der im Außenbereich des Kraftfahrzeuges sich befindende Benutzer oder Person stets die Außenfläche des Deckelelementes erkennen und betrachten kann. Üblicherweise dient diese Außenfläche als Werbeträger, Informationsträger etc.

Eine weitere die Erfindung verbessernde Maßnahme kann sein, dass der Schwenkarm an einer ersten Welle angeordnet ist, die über einen Elektromotor antreibbar ist, insbesondere der Schwenkarm mit der ersten Welle ein gemeinsames Bauteil bilden. Zudem ist es denkbar, dass der Schwenkarm L-förmig ausgeführt ist. Eine Verzahnung zwischen dem Motor und dem Deckelelement kann durch ein Schneckengetriebe gebildet werden, welches selbsthemmend ausgestaltet ist.

Besonders vorteilhaft kann sein, dass ein Montageelement vorgesehen ist, das rückseitig mehrere Befestigungsbereiche aufweist, an denen die Kameraeinheit und der Antrieb, insbesondere der Elektromotor und die Welle angeordnet sind. Zudem ist es in einer weiteren möglichen Ausgestaltung der Erfindung denkbar, dass die Befestigungsbereiche und/oder die Führungskontur einstückig mit dem Montageelement verbunden sind, insbesondere das Montageelement mit den Befestigungsbereichen und/oder der Führungskontur ein gemeinsames Bauteil bilden.

An dem Montageelement sind vorzugsweise sämtliche Bauteile vorkonfektioniert, dass bedeutet, dass die Kameraeinheit, der Antrieb mit seinem Mechanismus sowie Deckelelement am Montageelement angebracht und/oder mit integriert sind. Gleichzeitig weist das Montageelement zumindest ein Befestigungsmittel auf, das zur Befestigung an der Karosserie des Fahrzeuges dient. Der Monteur muss lediglich von Außen das vorkonfektionierte Montageelement an der Karosserie befestigen. Die wesentlichen Elemente der erfindungsgemäßen Vorrichtung, wie Kameraeinheit, Antrieb mit Mechanismus sowie die elektrischen Anschlüsse hierzu werden durch eine entsprechende Öffnung an der Kraftfahrzeugkarosserie hindurch geführt, wobei gleichzeitig die Befestigungsmittel des Montageelementes für eine zuverlässige Fixierung außenseitig an der Kraftfahrzeugkarosserie sorgen.

Ebenfalls kann erfindungswesentlich sein, dass eine Positionserfassung vorgesehen ist, die zumindest die Schließstellung und die Offenstellung des Deckelelements erkennt, wobei entsprechend der Schließstellung und die Offenstellung der Elektromotor aktiviert und/oder deaktiviert wird. Die Positionserfassung kann mechanisch, elektronisch und/oder über eine Software gesteuert/geregelt werden. In einer möglichen Ausführungsform der Erfindung kann die Positionserfassung zumindest einen Geber aufweisen, dessen Position von einem Sensor oder einem Schalter erkannt wird, wobei insbesondere der Geber an der ersten Welle angeordnet ist. Der Sensor kann beispielsweise ein passiver oder aktiver Sensor sein. Der Sensor kann beispielsweise ein berührungslos arbeitender Sensor sein oder ein Berührungssensor sein. Der Sensor kann ein Piezoelement aufweisen oder als Hallsensor ausgeführt sein. Alternativ kann ein Schalter vorgesehen sein, der mit dem Geber entsprechend in Wirkverbindung steht. Der Geber kann beispielsweise über die Bewegung des Deckelelementes eine Positionsveränderung vornehmen, die durch den Schalter erkannt wird, bzw. der Schalter entsprechend kontaktiert wird. Der Geber kann beispielsweise an der ersten Welle vorgesehen sein. Ebenfalls ist es denkbar, dass der Geber am Deckelelement, insbesondere am ersten und/oder am zweiten Verbindungselement, vorgesehen ist.

In einer bevorzugten Ausführungsform der Erfindung können zwei Geber angeordnet sein, deren Position von jeweils einem Sensor oder einem Schalter erkannt wird. Der erste Geber dient dazu, die Offenstellung des Deckelelementes der Positionserfassung "mitzuteilen". Der zweite Geber hat die Aufgabe, die Schließstellung der Positionserfassung "mitzuteilen". Hat der Sensor bzw. Schalter die entsprechenden Informationen vom Geber erhalten, erfolgt eine Deaktivierung des Elektromotors, so dass das Deckelelement ruhend in der Offenstellung und/oder der Schließstellung verbleibt.

Ebenfalls kann vorgesehen sein, dass die Positionserfassung eine Steuereinheit umfasst, die zeitlich den Antrieb für die Öffnungsbewegung und Schließbewegung des Deckelelementes ansteuert und/oder über die Stromaufnahme des Motors erkennt, wann die Offenstellung und die Schließstellung erreicht sind. Die Steuereinheit kann beispielsweise über eine entsprechende Software die Öffnungsbewegung und die Schließbewegung ansteuern sowie eine Deaktivierung des Motors bei Erreichen der Offenstellung bzw. der Schließstellung des Deckelelementes auslösen. Hierbei ist es denkbar, dass über die Stromaufnahme des Motors die Software sowie die Steuereinheit erkennt, wann die Offenstellung und die Schließstellung erreicht sind. Die Steuereinheit kann in der Montagegruppe integriert sein. Ebenfalls ist es möglich, dass die Steuereinheit sich außerhalb der Montagegruppe, beispielsweise im Kraftfahrzeug, befindet.

Ebenfalls kann vorgesehen sein, dass die erste Welle ein erstes Verzahnungselement aufweist, das auf ein zweites Verzahnungselement einer zweiten Welle wirkt, wobei die zweite Welle im Wesentlichen parallel zur ersten Welle verläuft. Die parallele Anordnung der ersten zur zweiten Welle begünstigt eine kompakte platzsparende Gesamtanordnung. Ferner bewirken die beiden Wellen, dass eine zuverlässige Kraftübertragung vom Motor auf das Deckelelement ausgeübt wird. Die genannten Verzahnungselemente sind derart ausgestaltet, dass ein entsprechendes Übersetzungsverhältnis innerhalb des Antriebes bereitgestellt wird, damit der elektrische Motor eine entsprechende Kraft auf das Deckelelement ausüben kann, damit dieses seine jeweilige Stellung erreicht. Die Anordnung der genannten Verzahnungselemente begünstigt, dass ein einfacher und kostengünstiger Elektromotor zum Einsatz kommen kann, der insbesondere eine hohe Motordrehzahl hat. Über die Verwendung vori zwei Wellen sowie den entsprechenden Verzahnungselementen, die aufeinander wirken, kann eine derartige Übersetzung geschaffen werden, die ein hohes Drehmoment entstehen lässt, welches auf das Deckelelement wirkt. Hierbei kann vorteilhaft ausgeführt sein, dass die zweite Welle ein drittes Verzahnungselement aufweist, das mit einem vierten Verzahnungselement, insbesondere mit einem Spindelelement oder Schneckenelement zusammenwirkt, das durch den Elektromotor angetrieben wird. Diese vier Verzahnungselemente begünstigen ebenfalls, dass ein hohes Drehmoment auf das Deckelelement ausgeübt wird, wenn der Elektromotor aktiviert ist.

Weiterhin kann erfindungsgemäß vorgesehen sein, dass die Befestigungsbereiche gleichzeitig als Lagerung der ersten und/oder der zweiten Welle ausgebildet sind. Darüber hinaus kann erfindungswesentlich sein, dass eine Abdeckung rückseitig am Montageelement angeordnet ist, die im Wesentlichen die Bestandteile des Antriebes und der Kameraeinheit abdeckt und/oder abdichtet. Besonders vorteilhaft kann sein, dass die Abdeckung an ihrer dem Montageelement zugewandten Innenseite eine Kontur aufweist, die als Lagerung für zumindest ein Element des Antriebes oder der Kameraeinheit dient. Die Innenseite kann an diversen Stellen Konturen aufweisen, die als Lagerung der wesentlichen Elemente des Antriebes oder der Kameraeinheit dienen. Somit kann auf der einen Seite das Montageelement an definierten Bereichen Lagerungsoberflächen aufweisen und auf der anderen Seite kann die Abdeckung an ihrer Innenseite Konturen als Lagerungsoberflächen aufweisen, wobei im montierten Zustand der Abdeckung am Montageelement eine zuverlässige Befestigung und Halterung sowie Lagerung der wesentlichen Komponenten des Antriebes, insbesondere der ersten und/oder der zweiten Welle, des Schwenkarms, des ersten und/oder des zweiten Verbindungselementes, der ersten und der zweiten Achse, des Motors sowie seiner Motorwelle, des ersten, des zweiten, des dritten und des viertes Verzahnungselementes, der Kameraeinheit der wesentlichen Komponenten der Positionserfassung, insbesondere des Gebers, des Sensors, des Schalters geschaffen wird.

Gemäß einer bevorzugten Ausgestaltung der Erfindung ist die Kameraeinheit unbeweglich am Montageelement befestigt. Somit wird eine einfache und platzsparende Gesamtanordnung geschaffen. Die Kameraeinheit kann sowohl in der Schließstellung als auch in der Offenstellung unbeweglich und starr am Montageelement befestigt sein. Gleichzeitig ist die Kameraeinheit entsprechend zum Außenbereich des Kraftfahrzeuges ausgerichtet, insbesondere kann die Kameraeinheit in einem definierten Winkel zum Boden ausgerichtet sein.

Die Vorrichtung kann ebenfalls derart ausgestaltet sein, dass das Montageelement eine erste und eine zweite Führungskontur aufweist, in der jeweils ein zweites Verbindungselement bewegbar gelagert ist, wobei die Kameraeinheit und der Elektromotor zwischen der ersten und der zweiten Führungskontur angeordnet sind. Ferner kann vorgesehen sein, dass zwei Schwenkarme vorgesehen sind, an denen das Deckelelement gelenkig angeordnet ist. Die Schwenkarme können an der ersten Welle voneinander beabstandet angeordnet sein. Hierbei kann das Montageelement Ausnehmungen aufweisen, in denen die Schwenkarme zumindest teilweise sich erstrecken. Diese Ausnehmungen können Bestandteil der rückseitigen Befestigungsbereiche des Montageelementes sein. Hierbei begrenzen die erste und die zweite Führungskontur die Anordnung der Kameraeinheit und des Elektromotors sowie zum größten Teil der ersten und der zweiten Welle mit ihren jeweiligen Verzahnungen. Auch die Positionserfassung kann zwischen den beiden Führungskonturen angeordnet sein. Ein Vorteil der auf zwei Seiten vorgesehenen Führungskonturen für das Deckelelement ist, dass eine zuverlässige und gradlinige sowie gleichmäßige Bewegung zwischen der Schließstellung und der Offenstellung erzielbar ist. Gleichzeitig befindet sich zwischen beiden Führungskonturen genügend Raum, um die wesentlichen Antriebselemente sowie die fest angeordnete und starr unbewegliche Kameraeinheit anzuordnen.

Eine weitere vorteilhafte Ausgestaltung der Erfindung ist, dass beim Verfahren zur Befestigung der erfindungsgemäßen Vorrichtung das Montageelement rückseitig über eine Rastverbindung verfügt, über die eine zuverlässige Befestigung am Karosserieteil bewirkt werden kann. Ohne jeglichen Aufwand kann das vorkonfektionierte Montageelement auf einfache Art und Weise außenseitig auf den definierten Bereich des Karosserieteils aufgesteckt werden. Selbstverständlich sind alternative Befestigungsarten denkbar, beispielsweise über eine form- und/oder kraft- und/oder stoffschlüssige Verbindung, beispielsweise kann über eine Schraubverbindung eine Befestigung des Montageelementes am Karosserieteil erreicht werden. Eine Klebverbindung ist ebenfalls denkbar.

Des Weiteren kann die erfindungsgemäße Vorrichtung mit einer Kameraeinheit, die zur Bilderfassung des Außenbereiches eines Kraftfahrzeuges dient, ausgestattet sein. Um die Kameraeinheit vor Verschmutzungen zu schützen, kann ein Deckelelement an der Vorrichtung vorgesehen sein, das über den Antrieb von einer Schließstellung in eine Offenstellung bewegbar ist, wobei sich in der Schließstellung des Deckelelementes die Kameraeinheit von Außen unzugänglich hinter dem Deckelelement befindet und in eine Offenstellung des Deckelelementes die Bilderfassung für die Kameraeinheit durchführbar ist. Im Sinne dieser Erfindung wird unter einem Bauteil unter anderem ein Bestandteil des Antriebes verstanden. Hierbei kann es sich um einen Motor, eine Welle, ein Zahnrad, ein Getriebe oder dergleichen handeln. Auch die Kameraeinheit und/oder das Betätigungselement wird im Sinne dieser Erfindung als Bauteil verstanden. Bei dieser Vorrichtung ist die Kameraeinheit geschützt hinter dem Deckelelement angeordnet, wobei die Kameraeinheit selbst unbeweglich oder starr an der Vorrichtung angeordnet sein kann. Auch ist es denkbar, dass die Kameraeinheit ebenfalls über einen Antrieb schwenkbar oder beweglich an der Vorrichtung angeordnet ist.

Ebenfalls ist es denkbar, dass die Vorrichtung zusätzlich zur Kameraeinheit oder optional ein Betätigungselement in Form eines Griff-/ oder Knopfelements aufweist, womit ein Schloss für ein bewegliches Teil, wie z. B. eine Klappe, Tür oder dergleichen, manuell oder elektrisch betätigbar ist. Zweckmäßigerweise kann dieses Betätigungselement ebenfalls hinter dem Deckelelement für eine Kameraeinheit vorgesehen sein. Auch ist es denkbar, dass die Vorrichtung nur das Betätigungselement ohne Kameraeinheit aufweist, wobei das Betätigungselement dann in jedem Fall hinter einem beweglichen Deckelelement, was von einem Antrieb betätigbar ist, angeordnet ist.

Ferner kann die Vorrichtung optional mit einem Annäherungssensor ausgestattet sein, der insbesondere in oder an dem Deckelelement positionierbar ist. Durch diesen Annäherungssensor ist es möglich, dass das Deckelelement angesteuert wird, wenn z. B. der Annäherungssensor ein Objekt in seiner Nähe messtechnisch erfasst. Hierdurch kann das Deckelelement von seiner Schließstellung in seiner Offenstellung bewegt werden. Dieses kann z. B. dann sinnvoll sein, wenn ein Fußgänger einen Mindestabstand zu der erfindungsgemäßen Vorrichtung unterschreitet und der Annäherungssensor ein entsprechendes Messsignal erfasst, so dass eine Bilderfassung durch die Kameraeinheit erfolgen soll. Auch kann dieses Messsignal vom Annäherungssensor dazu genutzt werden, dass z. B. das Deckelelement angehoben wird, damit das Betätigungselement für einen Bediener des Fahrzeuges erreichbar wird. In diesem Fall kann optional eine Kameraeinheit hinter dem Deckelelement angeordnet sein, die aber nicht zwingend erforderlich ist.

Ebenfalls ist es denkbar, dass eine Öffnung in dem Montageelement vorgesehen ist, durch die die Bilderfassung der Kamera durchführbar ist oder das Betätigungselement erreichbar ist, wobei die Öffnung von dem Deckelelement in der Schließstellung verschlossen ist. Damit ein Innenraum der Vorrichtung, der sich hinter dem Deckelelement befindet, vor Verschmutzung geschützt ist, kann eine Dichtung zwischen dem Deckelelement und der Vorrichtung, insbesondere dem Montageelement vorgesehen sein. Diese Dichtung kann aus einem elastischen Material, insbesondere Gummi oder Silikon bestehen oder z. B. durch eine Labyrinthdichtung gebildet werden.

Bei der erfindungsgemäßen Vorrichtung ist es ebenfalls denkbar, dass wenigstens ein im Gehäuse ruhendes Bauteil durch einen Motor, eine Kameraeinheit und/oder eine Steuereinheit oder dergleichen gebildet ist, wobei die Lagerung des ruhenden Bauteils einerseits eine Aufnahme und andererseits ein Sicherungselement aufweist. Zweckmäßigerweise ist die lagerungbildende Aufnahme für das ruhende Bauteil in dem Montageelement angeordnet, so dass das ruhende Bauteil nur in diese entsprechende Aufnahme eingelegt werden braucht. Um das ruhende Bauteil in diese Aufnahme aber unbeweglich zu fixieren bzw. zu halten, kann zumindest ein bereits erwähntes Sicherungselement vorgesehen sein, welches an der Abdeckung vorgesehen ist. Das Sicherungselement kann selbst federnd oder nachgiebig ausgestaltet sein, um Maßtoleranzen auszugleichen. Selbstverständlich ist es auch denkbar, dass ein ruhendes Bauteil durch mehrere Sicherungselemente in seiner Aufnahme gehalten ist. Zweckmäßigerweise ist die Kontur der Aufnahme der Kontur des ruhenden Bauteils angepasst, damit dieses formschlüssig in der Aufnahme angeordnet werden kann. Zusätzlich kann auch ein Fixierelement vorgesehen sein, um das Bauteil in seiner entsprechenden Aufnahme zu fixieren. Dieses Fixierelement kann aus einem Rastelement bestehen. Durch dieses zusätzliches Fixierelement kann sichergestellt werden, dass das entsprechende Bauteil nicht aus seiner Aufnahme im Montageelement herausfällt, falls diese umgedreht oder gekippt wird, wenn die Abdeckung noch nicht befestigt ist.

Ebenfalls kann es bei der erfindungsgemäßen Vorrichtung optional vorgesehen sein, dass zumindest ein bewegliches Bauteil durch eine drehbare Welle gebildet ist, die Bestandteil des Antriebs, insbesondere von einem Getriebe des Antriebes darstellt, wobei das Bauteil nur einseitig oder mehrseitig durch die Lagerung im Gehäuse aufgenommen ist. So ist es z. B. möglich, das bewegliche Bauteil nur durch eine links- oder rechtsseitige Lagerung im Gehäuse zu halten. Die üblicherweise vorgesehene Lagerung auf der anderen Seite kann durch ein anderes bewegliches Bauteil gebildet werden. So kann z. B. eine Welle mit einem Zahnrad eine Lagerung am Wellenabschnitt aufweisen und eine zweite Lagerungsmöglichkeit erfahren, in dem ein weiteres Zahnrad mit dem Zahnrad auf der Welle mechanisch zusammenwirkt. Folglich ist im herkömmlichen Sinne nur eine einseitige Lagerung des entsprechenden Bauteils (z. B. Welle mit Zahnrad) vorgesehen.

Des Weiteren ist es optional bei der erfindungsgemäßen Vorrichtung denkbar, dass zumindest eine Lagerung eines beweglichen Bauteils durch zwei Lagerhälften gebildet ist, wobei an einem Befestigungsbereich eine erste Lagerhälfte an dem Montageelement rückseitig, dass heißt an der abgewandten Seite vom Deckelelement, und/oder eine zweite Lagerhälfte an der Abdeckung innenseitig, dass heißt an der Seite der Abdeckung, die zum Montageelement hin gerichtet ist, vorgesehen ist. Bei der Lagerung des beweglichen Bauteils kann ebenfalls ein Fixierelement für das bewegliche Bauteil an dem Montageelement vorgesehen sein. Durch das Zusammenfügen des Montageelementes mit der Abdeckung, was zweckmäßigerweise dadurch erfolgt, dass die Abdeckung auf das Montageelement gesetzt wird, wird die vollständige Lagerung des beweglichen Bauteils hergestellt.

Die erste und zweite Lagerhälfte einer Lagerung für ein bewegliches Bauteil können halbkreisförmig oder halbzylinderförmig ausgestaltet sein, um hierdurch eine Welle, die das bewegliche Bauteil darstellt, optimal drehbar zu lagern. Das bewegliche Bauteil ist dann in der Lagerung formschlüssig aber drehbar gehalten. Um eine axiale Verschiebung des beweglichen Bauteils in der Lagerung zu vermeiden, ist zumindest eine Seite der Lagerung verschlossen, so dass die Lagerung insgesamt (halb-)zylinderförmig ausgestaltet ist durch die erste und zweite Lagerhälfte. Zweckmäßigerweise ist dann die der geschlossenen Seite gegenüberliegende Seite offen ausgestaltet, wodurch die Welle einseitig aus der Lagerung ragen kann. Auch ist es denkbar, dass die Lagerung links- und rechtseitig offene Seiten aufweist, wodurch jedoch das bewegliche Bauteil in Form einer Welle keine axiale Lagerung erfährt. Selbstverständlich können auch beide äußeren Seiten der Lagerung geschlossen sein, so dass das entsprechende bewegliche Bauteil sowohl links- als auch rechtsseitig axial in der Lagerung gehalten ist.

Die erste und zweite Lagerhälfte können spiegelbildlich zueinander ausgestaltet sein und einen Freiraum aufweisen, um dem Bauteil bei einer Bewegung ausreichend Platz bereitzustellen. Der Freiraum ist z. B. dann erforderlich, wenn es sich bei dem Bauteil um eine Welle mit einem Zahnrad oder einem Schwenkarm oder dergleichen handelt. Außerdem können die ersten und die zweiten Lagerhälften rippenförmig ausgestaltet sein, wobei die herausragenden Rippen die konkreten Lagerstellen für das Bauteil bilden. Auf diese Art und Weise ist eine besonders materialsparende Konstruktion der Vorrichtung möglich.

Ferner kann bei der erfindungsgemäßen Vorrichtung optional vorgesehen sein, dass ein oder alle Bauteile in die entsprechende Lagerung im Montageelement lose eingelegt werden und nur durch das Aufsetzen der Abdeckung ortsfest im Gehäuse angeordnet sind.

Ebenfalls ist es bei der erfindungsgemäßen Vorrichtung vorstellbar ist, dass zumindest eine Lagerung an dem Montageelement stegförmig aus der insbesondere eben ausgestalteten Rückseite herausragt und gleichzeitig eine Führungskontur für das bewegliche Deckelelement bildet. Somit kann eine stegförmig ausgebildete Lagerung an dem Montageelement zwei Funktionen erfüllen, in dem es zum einen ein entsprechendes Bauteil, wie z. B. eine Welle, drehbar im Gehäuse lagert und anderseits eine Führungskontur für das bewegliche Deckelelement vorsieht. Auf diese Art und Weise kann eine besonders kompakte Vorrichtung mit einem beweglichen Deckelelement erhalten werden.

Zweckmäßigerweise kann es bei der erfindungsgemäßen Vorrichtung vorgesehen sein, dass die Abdeckung an ihrer dem Montageelement zugewandten Innenseite eine Kontur aufweist, die als Lagerung für zumindest ein Element des Antriebs oder der Kameraeinheit dient. Durch die entsprechende Ausgestaltung der Kontur, die auf die Lagerung der Bauteile geometrisch abgestimmt ist, werden die Bauteile im Gehäuse ortsfest gehalten. Ebenfalls ist es denkbar, dass an der Innenseite der Abdeckung die bereits erwähnten Sicherungselemente, die z. B. stiftförmig herausragen, vorhanden sind, um die Bauteile in ihrer Aufnahme im Montageelement zu fixieren.

Um die Abdeckung an dem Montageelement zu befestigen, kann es vorgesehen sein, dass zumindest ein Halteelement vorgesehen ist. Dieses Halteelement kann stiftförmig ausgestaltet sein. Hierbei ist es denkbar, dass das stiftförmige Halteelement an dem Montageelement angeordnet ist und mit einem entsprechenden Durchbruch in der Abdeckung formschlüssig zusammenwirkt, um die Abdeckung sicher mit dem Montageelement zu befestigen. Auch ist es denkbar, dass das Halteelement aus einer Spange oder einem Rastelement besteht, um die Abdeckung und das Montageelement sicher miteinander zu verbinden. Hierbei kann das Halteelement auch so ausgestaltet sein, dass die Verbindung zwischen Abdeckung und Montageelement unlösbar oder auch lösbar ausgestaltet ist. Folglich kann das Halteelement als entsprechend ausgestaltetes Rastelement ausgestaltet sein.

Um eine gute Abdichtung der erfindungsgemäßen Vorrichtung zu erzielen, kann es vorgesehen sein, dass die Abdeckung schalenförmig mit einem umlaufenden Rand an der Innenseite ausgestaltet ist und insbesondere zumindest ein Durchbruch für elektrischen Stecker oder elektrische Leitung aufweist, die zur elektrischen Versorgung der erfindungsgemäßen Vorrichtung dient. Der erwähnte umlaufende Rand der Abdeckung kann mit einem ebenen Bereich des Montageelementes zusammenwirken oder mit einem geometrischen komplementär ausgestalteten Rand des Montageelementes zusammenwirken. Dieser Rand am Montageelement kann den umlaufenden Rand der Abdeckung umfassen oder in ihm angeordnet sein, wodurch eine einfache Labyrinthdichtung erreichbar ist. Zwischen dem umlaufenden Rand und dem Montageelement kann zusätzlich eine Dichtung vorgesehen sein, wodurch das Gehäuse aus Abdeckung und Montageelement wasserdicht verschließbar ist. Die Dichtung kann unabhängig von der Ausgestaltung der Abdeckung und Montageelement zwischen den beiden Elementen vorgesehen sein. Eine besonders einfache Konstruktion kann dadurch erreicht werden, dass das Montageelement im Dichtungsbereich eben ausgestaltet ist und mit dem umlaufenden Rand der Abdeckung zusammenwirkt. Die zuvor erwähnten Durchbrüche für einen Stecker oder eine Leitung können ebenfalls mit einem Dichtelement versehen sein. Auch kann der Stecker selbst als Abdichtung für den Durchbruch dienen.

Ebenfalls ist es denkbar, dass das Deckelelement, das Montageelement und/oder die Abdeckung aus einem Gussteil bestehen, insbesondere aus einem Spritzgussteil. Somit können das Montageelement und/oder die Abdeckung einteilig ausgestaltet sein. Als Material für das Deckelelement, Montageelement und/oder die Abdeckung kann Kunststoff oder Leichtmetall, insbesondere Aluminium, verwendet werden. Auch ist eine Ausführung der zuvor genannten Elemente in Edelstahl oder Messing denkbar.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben ist. Es zeigen:
- Fig. 1: die erfindungsgemäße Vorrichtung mit einer Kameraeinheit, wobei ein Deckelelement vorgesehen ist, welches sich in einer Schließstellung befindet und somit die Kameraeinheit verdeckt,
- Fig. 2: die Vorrichtung gemäß Fig. 1, wobei das Deckelelement aus der Schließstellung in Richtung Offenstellung bewegt wird,
- Fig. 3: die Vorrichtung gemäß Fig. 1, wobei die Offenstellung des Deckelelementes erreicht ist,
- Fig. 4: eine Rückansicht der Vorrichtung gemäß Fig. 1,
- Fig. 5: eine weitere Rückansicht auf die Vorrichtung gemäß Fig. 1,
- Fig. 6: eine weitere Rückansicht gemäß der Vorrichtung gemäß Fig. 1,
- Fig. 7: die in Fig. 5 dargestellte Abdeckung in einer weiteren Ansicht und
- Fig. 8: eine weitere Detailansicht auf die Abdeckung, welche Bestandteile des Antriebes, insbesondere den Elektromotor sowie diverse Wellen, hält und lagert.

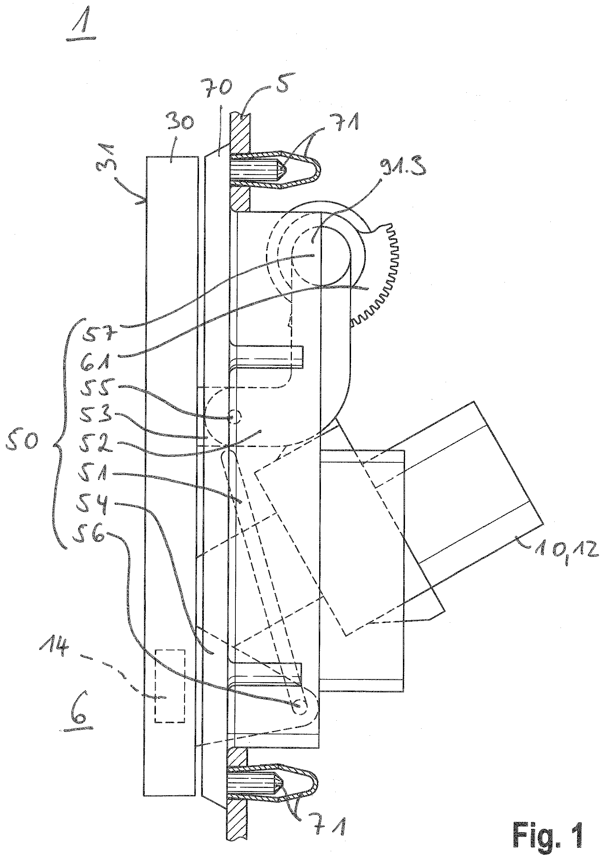

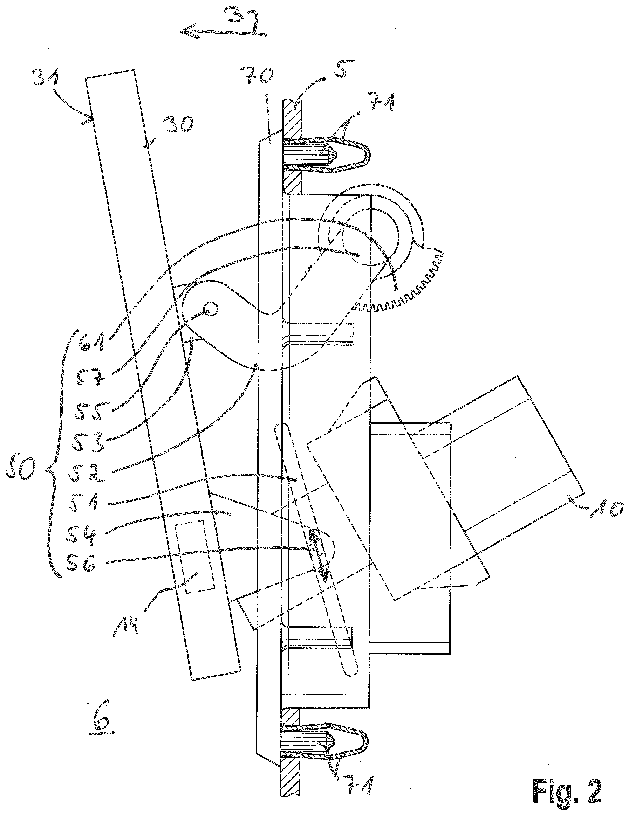

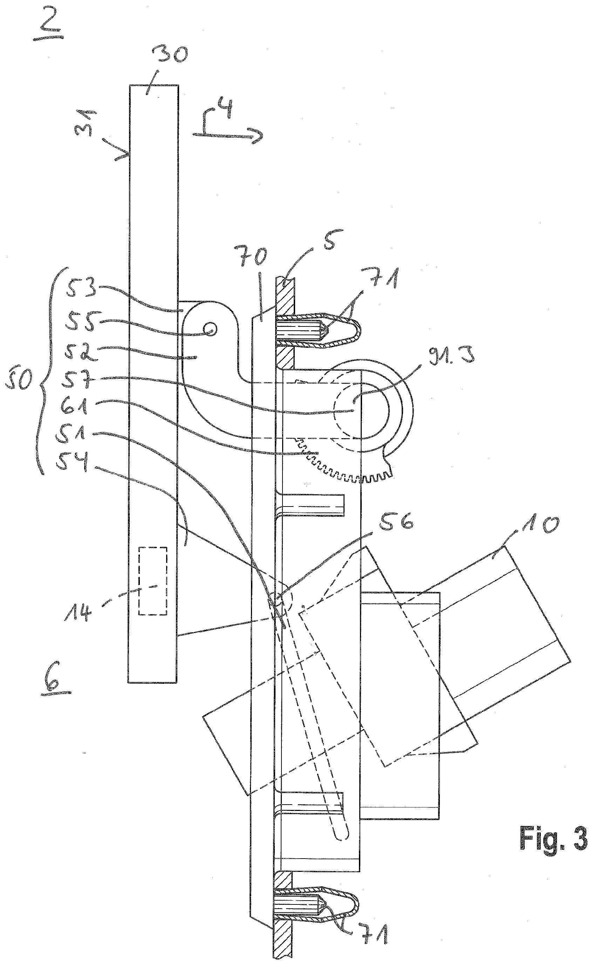

In Fig. 1 ist eine erfindungsgemäße Vorrichtung mit einer Kameraeinheit 10 dargestellt, die an einem Kraftfahrzeug befestigt ist. Die Befestigung befindet sich im oder am Heckbereich an einem Karosserieteil 5 des Kraftfahrzeuges. Die Kameraeinheit 10 dient zur Bilderfassung des Außenbereiches 6 des Kraftfahrzeuges, insbesondere wenn ein Parkvorgang des Kraftfahrzeughalters erfolgt. Es ist ein Deckelelement 30 vorgesehen, das über einen Antrieb 50 von einer Schließstellung 1, die in Fig. 1 dargestellt ist, in eine Offenstellung 2, die in Fig. 3 dargestellt ist, bewegbar ist. In der Schließstellung 1 des Deckelelements 30 befindet sich die Kameraeinheit 10 von außen unzugänglich hinter dem Deckelelement 30. Das Deckelelement 30 verschließt vollständig die Kameraeinheit 10, so dass eine Bilderfassung nicht möglich ist. Erfolgt nun über den Antrieb 50 eine Bewegung des Deckelelementes 30 in die Offenstellung 2, erfolgt eine entsprechende Schwenkbewegung des Deckelelementes 30, wobei Fig. 2 eine Zwischenstellung des Deckelelementes 30 zeigt.

In der Offenstellung 2 des Deckelelementes 30 kann eine Bilderfassung des Außenbereiches 6 des Kraftfahrzeuges durchgeführt werden. Wie in Fig. 1 bis Fig. 3 zu erkennen ist, weist das Deckelelement 30 eine Außenfläche 31 auf, die der Betrachter vom Außenbereich 6 erkennen kann. Die Außenfläche 31 kann als Informationsträger dienen. Beispielsweise ist ein Markenzeichen des Kraftfahrzeuges, ein Symbol oder ein Schriftzug auf der Außenfläche 31 anbringbar. Die Außenfläche 31 kann unterschiedliche geometrische Formen annehmen. Im vorliegenden Ausführungsbeispiel gemäß Fig. 1 bis Fig. 3 ist die Außenfläche 31 geradlinig ausgebildet. In einem nicht explizit dargestellten Ausführungsbeispiel kann selbstverständlich die Geometrie der Außenfläche 31 andersartig ausbildet sein, insbesondere kann die Außenfläche 31 in Richtung Außenbereich 6 ausgewölbt sein, insbesondere eine konvexe und/oder konkave Gestalt haben.

Wie in Fig. 1 bis Fig. 3 verdeutlicht ist, weist der Antrieb einen speziellen Mechanismus auf, der dafür sorgt, dass während der Bewegung des Deckelelementes 30 zwischen der Schließstellung 1 und der Offenstellung 2 die Außenfläche 31 in jeder Stellung des Deckelelementes 30 stets im Außenbereich 6 des Kraftfahrzeug sich befindet. Gleichzeitig bedeutet dieser spezielle Mechanismus zur Bewegung des Deckelelementes 30, dass in jeder Stellung des Deckelelementes 30 die Außenfläche 31 stets sichtbar für eine Person ist, die sich im Außenbereich 6 des Kraftfahrzeuges befindet.

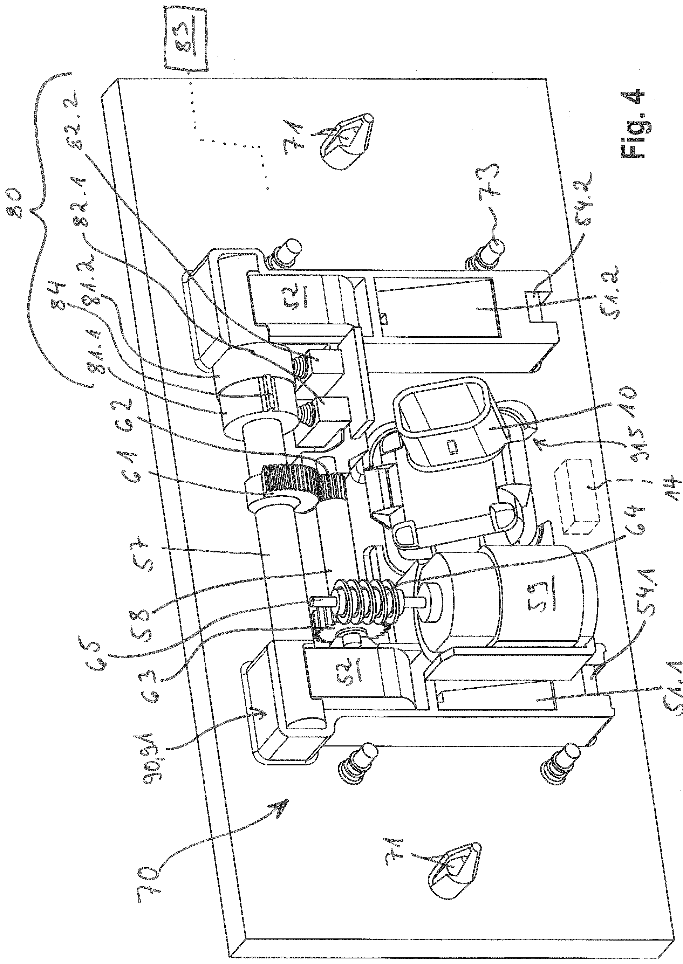

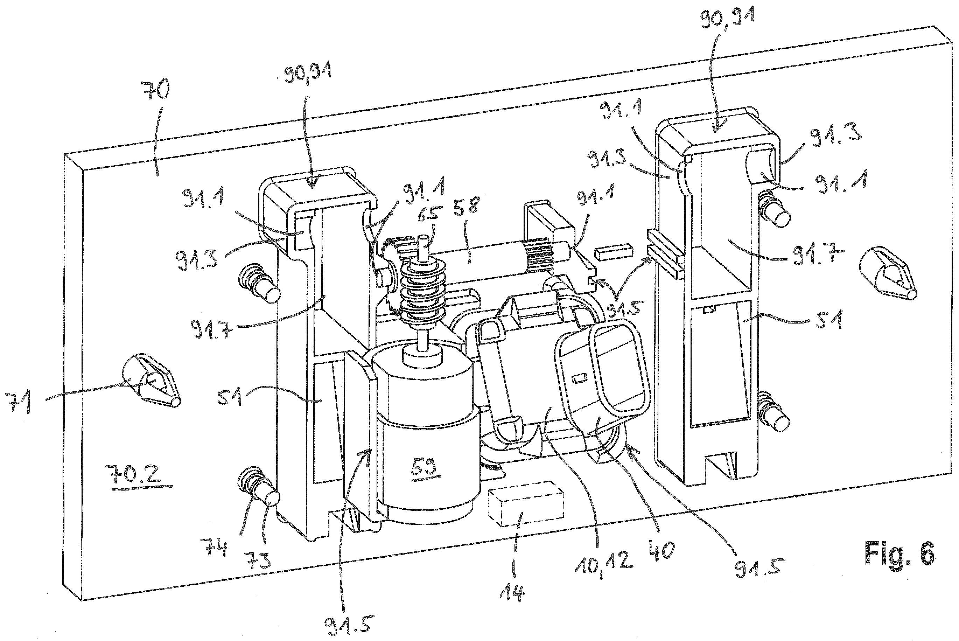

Ferner ist zu erkennen, dass der Mechanismus für die Bewegung des Deckelelementes 30 eine Führungskontur 51 benötigt sowie einen Schwenkarm 52. Im vorliegenden speziellen Ausführungsbeispiel sind zwei Führungskonturen 51.1, 51.2 vorgesehen, die in Fig. 4 und in Fig. 6 rückseitig zu erkennen sind. Ebenfalls sind zwei Schwenkarme 52 im Antrieb 50 vorgesehen, wobei beide Schwenkarme 52 voneinander beabstandet sind, welches in Fig. 4 gezeigt ist. Das Deckelelement 30 weist ferner an seiner Rückseite zwei erste Verbindungselemente 53 sowie zwei zweite Verbindungselemente 54 auf. Das erste Verbindungselement 53 ist jeweils gelenkig um die Achse 55 mit einem Schwenkarm 52 verbunden. Das zweite Verbindungselement 54 ist jeweils an der Führungskontur 51 gelagert. Im vorliegenden Ausführungsbeispiel erstreckt sich die Führungskontur 51.1, 51.2 linearförmig. Während der Antrieb 50 aktiviert ist, verschwenkt sich das Deckelelement 30 um die erste Achse 55, wobei gleichzeitig das Deckelelement 30 an seinem zweiten Verbindungselement 54 entlang der Führungskontur 51.1, 51.2 verfährt. Während das Deckelelement 30 entlang der Führungskontur 51.1, 51.2 entlang gleitet, erfolgt eine gleichzeitige Drehbewegung um die zweite Achse 56, die ebenfalls sich gleichzeitig entlang der Führungskontur 51.1, 51.2 translatorisch verschiebt.

Wie in Fig. 1 bis Fig. 3 zu erkennen ist, ist der Mechanismus derart ausgestaltet, dass während der Bewegung des Deckelelementes 30 von der Schließstellung 1 in die Offenstellung 3 in einer ersten Bewegungsphase 3, die in Fig. 2 gezeigt ist, das Deckelelement 30 sich vom Fahrzeug bzw. von der Karosserie 5 sich entfernt. Gleichzeitig verschwenkt sich das Deckelelement 30 sowohl um die erste Achse 55 als auch um die zweite Achse 56, wobei die zuletzt genannte Achse 56 sich gleichzeitig entlang der Führungskontur 51.1, 51.2 bewegt. In einer zweiten Bewegungsphase 4 wird das Deckelelement 30 zum Fahrzeug herangezogen, wobei das Deckelelement 30 sich gleichzeitig um die beiden Achsen 55, 56 zurückverschwenkt.

Die linearverlaufende Führungskontur 51.2, 51.2 weist einen Winkel β zur Außenkarosserie 5 des Kraftfahrzeuges auf. Dieser Winkel β ist ein spitzer Winkel, wodurch eine kompakte Bauform der erfindungsgemäßen Vorrichtung erzielt wird sowie der Schwenkbereich sowie die Schwenkbewegung des Deckelelementes 30 möglichst nah an der Karosserie 5 erfolgt. Wie die Figuren 1 bis 3 verdeutlichen, ist in der Schließstellung 1 sowie in der Offenstellung 2 die Außenfläche 31 des Deckelelementes 30 im Wesentlichen vertikal zur Fahrzeugkarosserie 5 ausgerichtet. Hierdurch wird die Sichtbarkeit der Außenfläche 31 für eine außenstehende Person im Außenbereich 6 erhöht. Zudem wird eine möglichst nahe Anordnung des Deckelelementes 30 an der Karosserie 5 des Kraftfahrzeuges in jeder Stellung 1, 2 erreicht. In der Offenstellung 2 befindet sich das Deckelelement 30 oberhalb der Kameraeinheit 10, die somit zuverlässig eine Bilderfassung des Außenbereiches 6 durchführen kann. Im vorliegenden Ausführungsbeispiel ist die Kameraeinheit 10 zum Boden (auf dem das Kraftfahrzeug steht) geneigt.

Gemäß den Figuren 1 bis 4 wird ferner gezeigt, dass jeder Schwenkarm 52 an einer ersten Welle 57 angeordnet ist, die über einen Elektromotor 59 angetrieben wird. Ferner ist eine zweite Welle 58 vorgesehen, die parallel zur ersten Welle 57 verläuft. Die erste Welle 57 weist ein erstes Verzahnungselement 61, das auf ein zweites Verzahnungselement 62 der zweiten Welle 58 wirkt. Zudem weist die zweite Welle 58 ein drittes Verzahnungselement 63 auf, das mit einem vierten Verzahnungselement 64 zusammenwirkt. Das vierte Verzahnungselement 64 ist Bestandteil einer dritten Welle 65, insbesondere der Motorwelle des Elektromotors 59. Im vorliegenden Ausführungsbeispiel ist das vierte Verzahnungselement 64 als Spindelelement oder als Schneckenverzahnung ausgebildet. Diese spezielle Ausbildung des Antriebes, insbesondere der ersten Welle 57, zweiten Welle 58, den Verzahnungselementen 61, 62, 63, 64 sowie der dritten Welle 65 dient vorteilhafterweise dazu, dass über den elektrischen Motor 59 ein hohes Drehmoment auf das Deckelelement 30 während seiner Bewegung in die jeweilige Stellung 1, 2 ausgeübt wird. Selbstverständlich kann der Antrieb 50 auch andersartig ausgestaltet sein, insbesondere lediglich eine Welle mit einem elektrischen Motor aufweisen, die für eine entsprechende Bewegung des Deckelelementes 30 sorgt.

Die Schwenkarme 52 sind im vorliegenden Ausführungsbeispiel einstückig mit der ersten Welle 57 verbunden, dass bedeutet, dass die Schwenkarme 52 sowie die erste Welle 57 ein gemeinsames Bauteil bilden. Ferner ist das erste Verzahnungselement 61, welches sich zwischen beiden Schwenkarmen 52 befindet, ebenfalls einstückig mit der ersten Welle 57 verbunden. Das erste Verzahnungselement 61 weist eine spezielle Ausführungsform auf, bei das Verzahnungselement um die Drehachse der ersten Welle 57 verläuft, wobei das Verzahnungselement 61 mit seinen einzelnen Zähnen sich lediglich um einen Viertelkreis um die Achse der ersten Welle 57 erstreckt. Das zweite Verzahnungselement 52 ist ebenfalls einstückig mit der zweiten Welle 58 verbunden. Hierbei weist die zweite Welle 58 einen kleineren Durchmesser auf als die erste Welle 57. Beabstandet zum zweiten Verzahnungselement 62 ist das dritte Verzahnungselement 63 ebenfalls auf der zweiten Welle 58 aufgesetzt.

Wie in sämtlichen Figuren zu erkennen ist, ist ein Montageelement 70 vorgesehen, an dem sämtliche Elemente, wie Kameraeinheit 10, Antrieb 50, einschließlich der ersten Welle 57, zweiten Welle 58, des elektrischen Motors 59 sowie des Deckelelementes 30 getragen werden. Dieses ist besonders in Fig. 4 gezeigt, die das Montageelement 70 rückseitig zeigt, wobei das Montageelement 70 mehrere Befestigungsbereiche 90 aufweist, an denen die oben genannten Elemente, die vom Montageelement 70 getragen werden, befestigt und/oder gelagert sind. Somit kann das Montageelement mit den wesentlichen Elementen, insbesondere der Kameraeinheit, der Bestandteile des Antriebes sowie mit dem Deckelelement 30 vorkonfektioniert werden. Darüber hinaus weist das Montageelement 70 zwei Befestigungsmittel 71 rückseitig auf, wodurch das Montageelement 70 auf einfache Weise außenseitig am Karosserieteil 5 des Kraftfahrzeugs befestigt werden kann. Die erfindungsgemäße Vorrichtung kann somit als vormontierte Montagegruppe vorliegen, die lediglich in einem einzigen Verfahrensschritt von außen auf die Karosserie 5 des Kraftfahrzeuges 5 zu befestigen ist. Hierbei weist die Karosserie 5 entsprechende Gegenbefestigungsmittel auf, die mit dem Befestigungsmittel 71 zusammenwirken. Beispielsweise kann über eine Schraubverbindung, Rastverbindung etc. eine Befestigung des Montageelementes 70 an der Karosserie 5 erzielt werden.

Die genannten Befestigungsbereiche 90 dienen gleichzeitig als Lagerung der ersten Welle 57, der zweiten Welle 58, der dritten Welle 65. Eine Besonderheit der Erfindung ist hierbei, dass die Befesigungsbereiche 90 sowie die Führungskonturen 51.1, 51.2 einstückig mit dem Montageelement 70 verbunden sind. Das Montageelement 70 kann beispielsweise ein Spritzgussteil aus Kunststoff sein.

Wie in Fig. 4 deutlich zu erkennen ist, weist die erfindungsgemäße Vorrichtung eine Positionserfassung 80 auf, die die Schließstellung 1 und die Offenstellung 2 des Deckelelementes 30 erkennt. Hierfür weist die Positionserfassung 80 einen ersten Geber 81.1 und einen zweiten Geber 81.2 auf. Beide Geber 81.1, 81.2 sind an der ersten Welle 57 angeordnet und weisen jeweils einen Nocken 84 auf, der vorsprungartig hervorsteht. Der Geber 81.1, 81.2 bzw. deren Nocken 84 wirken mit jeweils einem Schalter 82.1, 82.2 zusammen. Der erste Geber 81.1 ist hierbei zuständig für die Erkennung der Schließstellung 1. Der Geber 81.2 hingegen ist zuständig für die Erkennung der Offenstellung 2. Die Funktionsweise ist folgende: Wenn der rotierende Nocken 84 des Gebers 81.1 den Schalter 82 aktiviert, insbesondere mechanisch schaltet, wird dieses einer Steuereinheit 83 mitgeteilt, die wiederrum den Antrieb 50, insbesondere den elektrischen Motor 59, deaktiviert.

Schaltet der rotierende Nocken 84 des zweiten Gebers 81.2 den dazugehörigen Schalter 82.2, wird dieses der Steuereinheit 83 mitgeteilt bzw. die Steuereinheit 83 erkennt diese Schaltung, die wiederum eine Deaktivierung des Antriebes 50, insbesondere eine Deaktivierung des elektrischen Motors 59 durchführt, wodurch die Offenstellung 2 des Deckelelementes 30 erkannt wird.

Die Steuereinheit 83 kann beispielsweise außerhalb der erfindungsgemäßen Vorrichtung, beispielsweise innerhalb des Kraftfahrzeuges sich befinden, welches in Fig. 4 schematisch gezeigt ist. Alternativ kann die Steuereinheit 83 sich unterhalb der Schalter 82.1, 82.2 befinden, die an entsprechenden Befestigungsbereichen 90 des Montageelementes 70 angeordnet ist.

Alternativ kann die Positionserfassung 80 mit einer Steuereinheit 83 ausgebildet sein, die zeitlich den Antrieb 50 für die Öffnungsbewegung und Schließbewegung des Deckelelementes 30 ansteuert und beispielsweise über die Stromaufnahme des Motors 59 erkennt, wann die Offenstellung 2 und die Schließstellung 1 erreicht ist. Vorzugsweise ist eine entsprechende Software in der Steuereinheit 83 integriert, die eine derartige Stromaufnahmeerkennung durchführt.

In den Fig. 1 bis 4 ist eine Annäherungssensor 14 optional angeordnet, der deshalb gestrichelt dargestellt ist. Dieser kann in oder am Deckelelement 30 oder am Montageelement 70 angeordnet sein. Ferner kann die Kameraeinheit 10 auch durch ein Betätigungselement 12 ersetzt oder ergänzt werden.

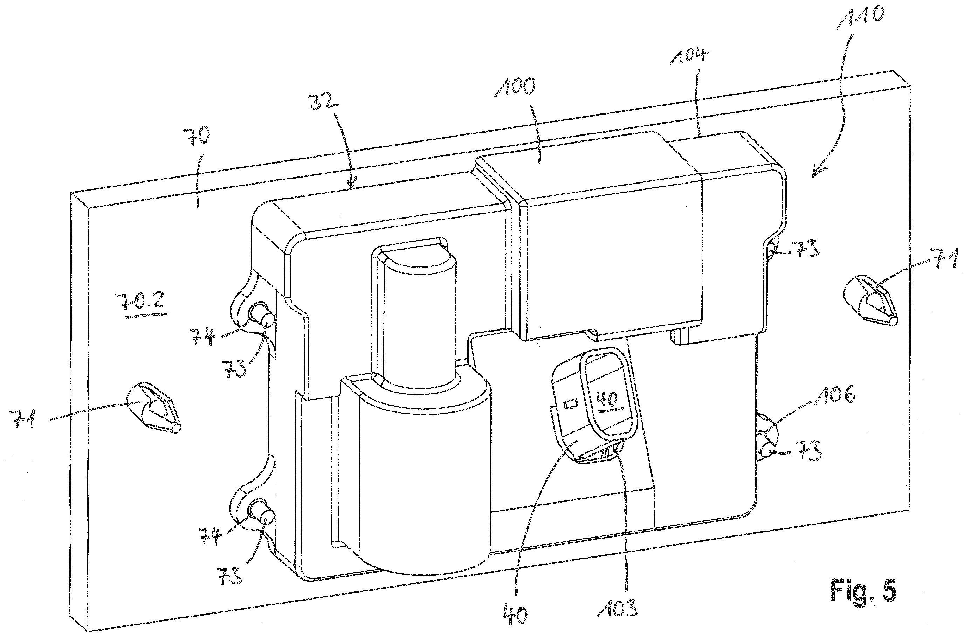

In Figur 5 ist die erfindungsgemäße Vorrichtung von der Rückseite 70.2 des Montageelementes 70 dargestellt. Hierbei ist die Abdeckung 100 mit dem Montageelement 70 zusammengefügt und bildet das Gehäuse 110. Um die Abdeckung 100 sicher an dem Montageelement 70 zu befestigen, sind stiftförmige Halteelemente 73 an dem Montageelement 70 angeordnet, die aus der Rückseite 70.2 herausragen. Die Abdeckung 100 ist im Gegenzug mit Durchbrüchen 106 für die Halteelemente 73 ausgestattet, um die Abdeckung 100 über die Halteelemente 73 zu führen. Damit die Abdeckung 100 sich nicht von den Halteelementen löst, sind Sicherungsringe 74 vorgesehen, die form- und/oder kraftschlüssig mit den Halteelementen 73 zusammenwirken und die Abdeckung 100 in ihrer Zusammenbauposition an dem Montageelement halten. Damit das Gehäuse 110 zur Rückseite 70.2 abgedichtet ist, ist eine Dichtung 32 zwischen dem Montageelement 70 und der Abdeckung 100 vorgesehen. Zweckmäßigerweise sitzt diese Dichtung 32 auf einem umlaufenden Rand 104 der Abdeckung 100 und wirkt mit der Rückseite 70.2 des Montageelementes 70 zusammen. Die Rückseite 70.2 ist im Bereich des umlaufenden Randes 104 eben ausgestaltet, so dass eine gute Dichtwirkung erzielt werden kann.

Ferner ist in der Fig. 5 zu erkennen, dass die Abdeckung 100 einen Durchbruch 103 für einen Stecker 40 aufweist, um die Vorrichtung über eine elektrische Leitung anschließen zu können. Für den Durchbruch 103 kann ebenfalls eine Dichtung vorgesehen sein, um die Abdeckung 100 an dieser Stelle abzudichten. Allerdings ist es auch denkbar, dass der von außen zugeführte Stecker, der mit dem Stecker 40 zusammenwirkt, den Durchbruch 103 abdichtet. Somit kann auf eine zusätzliche Dichtung an dieser Stelle verzichtet werden.

Die gesamte Abdeckung 100 kann auch durch gewindeförmige Halteelemente 73 oder spangenförmige Halteelemente 73 oder Clips oder rastförmige Halteelemente 73 mit dem Montageelement 70 fest verbunden werden. In der Fig. 5 kommen insgesamt 4 Halteelemente 73 zum Einsatz, die randseitig an den senkrechten Seitenrändern der Abdeckung 100 angeordnet sind.

Ebenfalls ist der Fig. 5 zu entnehmen, dass die gesamte Vorrichtung über die Befestigungsmittel 71 an der Karosserie 5 des Fahrzeuges befestigt werden kann. Diese Befestigungsmittel 71 sind spreizdübelartig ausgestaltet und wirken mit einer entsprechenden Bohrung in der Karosserie zusammen. Nach dem Durchführen der Befestigungsmittel 71 durch die Bohrungen in der Karosserie 5 wird ein Stift in die Befestigungsmittel 71 eingedrückt, wodurch sich die Befestigungsmittel 71 aufspreizen und die gesamte Vorrichtung form- und/oder kraftschlüssig an der Karosserie 5 halten. Die Montage der Vorrichtung kann hierbei ausschließlich vom Außenbereich 6 des Fahrzeuges 6 stattfinden.

In der Fig. 6 ist die Vorrichtung von der Rückseite 70.2 des Montageelementes 70 dargestellt, wobei die Abdeckung 100 fehlt. Ebenfalls wurde zur Verdeutlichung die erste Welle 57 aus ihren Lagerungen 91 entfernt, damit eine detaillierte Darstellung des entsprechenden Befestigungsbereichs 90 und der Lagerung 91 darstellbar ist. Die zweite Welle 58 ist hingegen in ihrer vergleichbaren Lagerung 91 im Montagelement 71 angeordnet. Die erste Welle 57, die zweite Welle 58 sowie die Motorwelle 65 stellen bewegliche Bauteile im Sinne der erfindungsgemäßen Vorrichtung dar, die durch die Lagerung 91 ortsfest im Gehäuse 110 angeordnet sind. Der Motor 59 sowie die Kameraeinheit 10 bzw. das Betätigungselement 12 sind u. a. als unbewegliche Bauteile an dem Montageelement 70 angeordnet. In der Fig. 6 ist ebenfalls die Steuereinheit 83 entfernt worden, um die Lagerung 91 für die unbewegliche Steuereinheit 83 im Detail darstellen zu können. Ebenfalls ist optional ein Näherungssensor 14 an der Rückseite 70.2 des Montageelementes angeordnet, der vergleichbar zur Positionserfassung 80 über eine Lagerung 91 mit dem Montageelement 70 befestigt werden kann. Der vergleichbarer Annäherungssensor 14 ist den Figuren 1 bis 4 im Deckelelement 30 optional angeordnet, der deshalb nur gestrichelt dargestellt ist.

Nachfolgend soll die Lagerung 91 für ein bewegliches Bauteil 57, 58, 65 näher beschrieben werden. Die erste Welle 57 wird links- und rechtsseitig über die Lagerungen 91 in den Befestigungsbereichen 90 am Montageelement 70 teilweise gelagert. Hierzu sind in dem Montagelement 70 erste Lagerhälften 91.1 eingeformt, die einen halbkreisförmigen Querschnitt aufweisen.

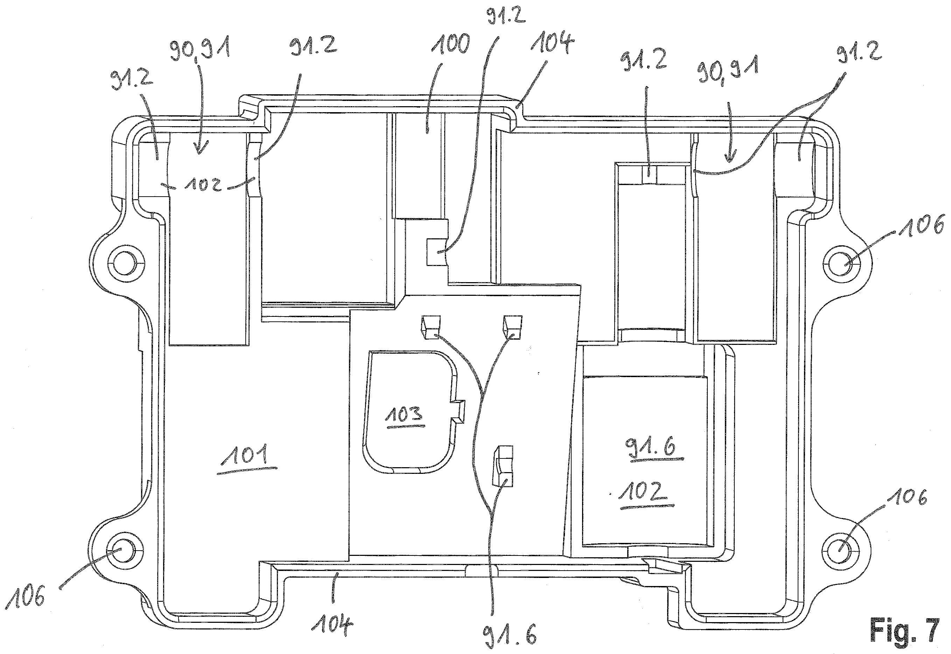

Damit die erste Welle 57 axial in der Lagerung 91 gehalten ist, sind die äußeren Seiten 91.3 der Lagerhälften 91.1 durchgehend ausgestaltet. Hingegen sind die inneren Seiten 91.3 der ersten Lagerhälfte 91.1 offen ausgestaltet, um die erste Welle 57 an diesen Seiten durchführen zu können. Die ersten Lagerhälften 91.1 der Welle 57 weisen einen Freiraum 71.7 auf, der dazu dient, den Schwenkarm 52, der an der Welle 57 befestigt ist, durchführen zu können. Folglich sind die ersten Lagerhälften 91.1 rippenförmig an der Rückseite 70.2 des Montageelementes 70 angeordnet. Die erste Welle 57 wird nur in die ersten Lagerhälften 91.1 eingelegt und durch die zweiten Lagerhälften 91.2, die in der Abdeckung 100 angeordnet sind, beweglich im Gehäuse 110 gelagert. Hierzu braucht nur die Abdeckung 100 auf das Montageelement 70 gesetzt werden. Die zweiten Lagerhälften 91.2 werden in der Figur 7 näher erläutert, die im Wesentlichen geometrisch komplementär zu den ersten Lagerhälften 91.1 im Montageelement 70 ausgestaltet sind. Die ersten Lagerhälften 91.1 und die zweiten Lagerhälften 91.2 sitzen sich direkt gegenüber, um somit die entsprechenden Bauteile sicher lagern zu können, wenn das Gehäuse 110 geschlossen ist.

Aus der Fig. 6 ist ebenfalls zu entnehmen, dass auch die zweite Welle 58 über entsprechende erste Lagerhälften 91.1 an dem Montageelement 70 beweglich angeordnet ist. Hierfür sind die ersten Lagerhälften 91.1 halbzylinderförmig ausgestaltet, um die runden Wellenenden der zweiten Welle 58 drehbar aufzunehmen.

Die äußeren Seiten 91.3 sind bei der Lagerung 91 für die zweite Welle 58 ebenfalls geschlossen, um diese axial im Gehäuse 110 zu halten.

Aber auch die unbeweglichen Bauteile, wie z. B. den Motor 59 und die Kameraeinheit 10 bzw. das Betätigungselement 12 oder die Positionserfassung 80 werden über Lagerungen 91 an dem Montageelement 70 gehalten. Hierfür sind an dem Montageelement 70 entsprechende Aufnahmen 91.5 angeordnet, die im Wesentlichen den äußeren Konturen der unbeweglichen Bauteile entsprechen. Die Lagerung 91 für die Positionserfassung 80 wird durch eine Linearführung gebildet, die auch die Aufnahme 91.5 darstellt. Somit wird die Positionserfassung 80 nur in die längliche Aufnahme 91.5 hineingeschoben. Der Motor 59 wird ebenfalls in seine geometrisch komplementär ausgestaltete Aufnahme 91.5 eingelegt genauso wie die entsprechende Kameraeinheit 10 bzw. das Betätigungselement 12 ebenfalls in die komplementär ausgestalteten Aufnahme 91.5 im Montageelement 70. Um auch die unbeweglichen Bauteile ortsfest im Gehäuse 110 zu halten, sind entsprechende Sicherungselemente 91.6 an der Abdeckung 100 angeordnet, die dafür sorgen, dass die unbeweglichen Bauteile in ihrer Aufnahme 91.5 gedrückt werden, wenn die Abdeckung 100 an dem Montageelement 70 montiert sind.

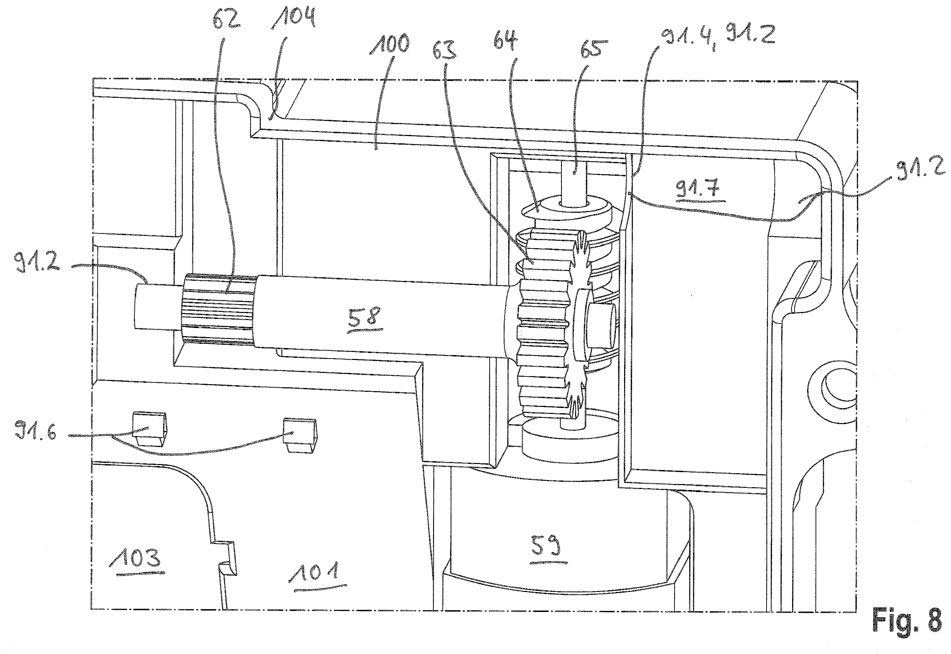

In der Fig. 7 ist nur die Abdeckung 100 von ihrer Innenseite 101 dargestellt. Dabei sind die Konturen 102 zur Befestigung der beweglichen und unbeweglichen Bauteile gut erkennbar, die sich durch die zweiten Lagerhälften 91.2 und Sicherungselemente 91.6 bilden. Die Abdeckung 100 ist im Wesentlichen kastenförmig ausgestaltet, und weist einen umlaufenden Rand 104 auf, der aus der Innenseite 101 herausragt. Die Innenseite 101 ist nicht eben sondern konturreich ausgestaltet, um somit die Bauteile der Vorrichtung in dem Gehäuse 110 ortsfest zu halten. Im oberen linken und rechten Befestigungsbereich 90 der Vorrichtung (aus Sichtweise der Fig. 7) sind gut die zweiten Lagerhälften 91.2 für die erste Welle 57 zu erkennen, die komplementär mit den ersten Lagerhälften 91.1 des Montageelementes 70 zusammenwirken und die gesamte Lagerung 91 für die Welle 57 bilden. Über dem Durchbruch 103 ist ebenfalls die zweite Lagerhälfte 91.2 für die zweite Welle 58 zu erkennen, die halbzylinderförmig in der Innenseite 101 der Abdeckung 101 eingearbeitet ist. Die zweite Welle 58 (aus Sichtweise der Fig. 7) nur linkseitig im Gehäuse 110 gelagert. Die rechtseitige Lagerung der zweiten Welle 58 erfolgt über das vierte Verzahnungselement 64, welches an der Motorwelle 65 des Motors 59 angeordnet ist (s. hierzu Fig. 8). Die Motorwelle 65 ist ebenfalls durch eine zweite Lagerhälfte 91.2 in der Abdeckung 100 gelagert. Auch diese ist im Wesentlichen halbzylinderförmig in der Abdeckung 100 eingearbeitet. Der Motor 59 selbst ist als unbewegliches Bauteil durch die Kontur 102 bzw. das komplementär ausgestaltete Sicherungselement 91.6 in der Lagerung 91 unbeweglich aufgenommen. Die Kameraeinheit 10 bzw. das Betätigungselement 12 wird in die Aufnahme 91.5 des Montageelementes 70 durch die drei Sicherungselemente 91.6 gedrückt, die nocken- oder stegförmig oberhalb bzw. rechtsseitig neben dem Durchbruch 103 an der Innenseite 101 an der Abdeckung 100 angeordnet sind. Diese Sicherungselemente 91.6 können federnd ausgestaltet sein, um die Kameraeinheit 10 bzw. das Betätigungselement 12 in die Aufnahme 91.5 zu pressen. Die Abdeckung 100 sowie das Montageelement 70 können einteilig ausgestaltet sein und als Gussteil oder Spritzgussteil hergestellt sein.

In der Fig. 8 ist zur Verdeutlichung in der Abdeckung 100 die zweite Welle 58 eingezeichnet und wirkt mechanisch mit dem ebenfalls dargestellten Motor 59 zusammen. Wie gut zu erkennen ist, wird die zweite Welle 58 nur linksseitig (aus Sichtweise der Fig. 8) in der Abdeckung 100 durch die zweite Lagerhälfte 91.2 bzw. Lagerung 91 gelagert. Rechtsseitig findet hingegen keine Lagerung der zweiten Welle 58 statt. Allerdings übernimmt die quer zur zweiten Welle 58 verlaufende Motorwelle 65 diese Lagerungsfunktion, da das dritte Verzahnungselement 63 an der zweiten Welle 58 mit dem vierten Verzahnungselement 64 an der Motorwelle 65 zusammenwirkt. Die Verzahnung zwischen der zweiten Welle 58 und der Motorwelle 65 bilden ein Schneckengetriebe, welches selbsthemmend ausgestaltet ist. Durch diese Selbsthemmung kann erreicht werden, dass das Deckelelement 30 automatisch in der Schließstellung 1 oder der Offenstellung 2 sowie jeder Zwischenstellung gehalten ist und nur durch eine Drehung der Motorwelle 65 aus diesen Stellungen bewegt werden kann. Somit kann der Motor 59 bei der Schließstellung 1 oder der Offenstellung 2 ausgeschaltet werden und trotzdem verharrt das Deckelelement 30 in diesen Stellungen. Das obere Ende der Motorwelle 65, welches über das Schneckenrad 64 bzw. das vierte Verzahungselement 64 ragt, ist in der Abdeckung 100 in einer zweiten Lagerhälfte 91.2 angeordnet, so dass diese Welle 65 nicht durch das Zahnrad 63 der zweiten Welle 58 weggedrückt werden kann. In der Ausschnittsvergrößerung der Abdeckung 100 aus der Fig. 8 sind gut die stegförmig ausgestalteten Sicherungselemente 91.6 für die Kameraeinheit 10 bzw. das Betätigungselement 12 oberhalb des Durchbruches 103 dargestellt. Diese sind im vorliegenden Fall federnd ausgestaltet, um somit Maß-/ oder Fertigungstoleranzen oder dergleichen beim Zusammenbauen der Vorrichtung ausgleichen zu können. Außerdem können somit hohe mechanische Spannungen in der Vorrichtung durch einen Zusammenbau des Montageelementes 70 mit der Abdeckung 100 und dem dazwischen angeordneten Bauteilen vermieden werden.

In der Fig. 8 ist auch ein Stück des umlaufenden Randes 104 deutlich sichtbar. Die zweite Lagerhälfte 91.2 für die erste Welle 57 ist rechts oben in der Fig. 8 dargestellt. Dabei wird die zweite Lagerhälfte 91.2 durch den Freiraum 91.7 durchtrennt, so dass links die zweite Lagerhälfte 91.2 durch den rippenförmigen Steg 91.4 gebildet wird.

### Bezugszeichenliste

- 1: Schließstellung
- 2: Offenstellung
- 3: erste Bewegungsphase
- 4: zweite Bewegungsphase
- 5: Karosserie
- 6: Außenbereich des Fahrzeuges

- 10: Kameraeinheit
- 12: Betätigungselement, insbesondere Griff-/ oder Knopfelement
- 14: Annäherungssensor
- 30: Deckelelement
- 31: Außenfläche
- 32: Dichtung
- 40: Stecker / Leitung

- 50: Antrieb
- 51: Führungskontur
- 51.1: erste Führungskontur
- 51.2: zweite Führungskontur
- 52: Schwenkarm
- 53: erstes Verbindungselement
- 53.1: erstes Verbindungselement
- 53.2: erstes Verbindungselement
- 54: zweites Verbindungselement
- 54.1: zweites Verbindungselement
- 54.2: zweites Verbindungselement
- 55: erste Achse
- 56: zweite Achse
- 57: erste Welle
- 58: zweite Welle
- 59: Motor, Elektromotor
- 61: erstes Verzahnungselement
- 62: zweites Verzahnungselement
- 63: drittes Verzahnungselement
- 64: viertes Verzahnungselement
- 65: dritte Welle, Motorwelle

- 70: Montageelement
- 70.1: Vorderseite
- 70.2: Rückseite
- 71: Befestigungsmittel
- 72: Öffnung
- 73: Halteelement (stiftförmig)
- 74: Sicherungsring

- 80: Positionserfassung
- 81: . Geber
- 81.1: Geber
- 81.2: Geber
- 82: Sensor, Schalter
- 82.1: Sensor, Schalter
- 82.2: Sensor, Schalter
- 83: Steuereinheit
- 84: Nocken

- 90: Befestigungsbereich
- 91: Lagerung
- 91.1: erste Lagerhälfte für bewegliches Bauteil
- 91.2: zweite Lagerhälfte für bewegliches Bauteil
- 91.3: Seite der Lagerhälfte
- 91.4: rippenförmiger Steg einer Lagerhälfte
- 91.5: Aufnahme für ruhendes Bauteil
- 91.6: Sicherungselement für ruhendes Bauteil
- 91.7: Freiraum

- 100: Abdeckung
- 101: Innenseite
- 102: Kontur
- 103: Durchbruch (für 40)
- 104: umlaufender Rand
- 105: Außenseite
- 106: Durchbruch (für 73)

- 110: Gehäuse

## Patentansprüche

1. Vorrichtung mit einer Kameraeinheit (10), die zur Bilderfassung des Außenbereiches eines Kraftfahrzeuges dient, und einem Deckelelement (30), das über einen Antrieb (50) von einer Schließstellung (1) in eine Offenstellung (2) bewegbar ist, wobei
in der Schließstellung (1) des Deckelelementes (30) die Kameraeinheit (10) von außen unzugänglich sich hinter dem Deckelelement (30) befindet und
in der Offenstellung (2) des Deckelelementes (30) die Bilderfassung durchführbar ist,
**dadurch gekennzeichnet,**
**dass** das Deckelelement (30) eine der Kameraeinheit (10) abgewandte Außenfläche (31) aufweist und der Antrieb (50) mit einem derartigen Mechanismus zusammenwirkt, dass während der Bewegung des Deckelelements (30) zwischen der Schließstellung (1) und der Offenstellung (2) die Außenfläche (31) in jeder Stellung des Deckelelementes (30) stets sich im Außenbereich (6) des Kraftfahrzeuges befindet, wobei der Mechanismus derart ausgestaltet ist, dass während der Bewegung des Deckelelementes (30) von der Schließstellung (1) in die Offenstellung (2)
in einer ersten Bewegungsphase (3) das Deckelelement (30) vom Fahrzeug sich entfernt und gleichzeitig sich um mindestens eine Achse (55, 56) verschwenkt und
in einer zweiten Bewegungsphase (4) das Deckelelement (30) zum Fahrzeug herangezogen wird und insbesondere gleichzeitig sich um zumindest eine Achse (55, 56) zurückverschwenkt.

2. Vorrichtung nach Anspruch 1,
**dadurch gekennzeichnet,**
**dass** der Mechanismus zumindest eine Führungskontur (51) und zumindest einen Schwenkarm (52) aufweist, wobei das Deckelelement (30) rückseitig an der Führungskontur (51.1, 51.2) und am Schwenkarm (52) befestigt ist, wobei insbesondere das Deckelelement (30) rückseitig ein erstes Verbindungselement (53.1, 53.2) und/oder ein zweites Verbindungselement (54.1, 54.2) aufweist, wobei zumindest ein Verbindungselement (53, 54) bewegbar gelagert an der Führungskontur (51.1, 51.2) und/oder dem Schwenkarm (52) ist.

3. Vorrichtung nach Anspruch 2,
**dadurch gekennzeichnet,**
**dass** die Führungskontur (51.1, 51.2) linearförmig und/oder zumindest bereichsweise bogenförmig ist, wobei insbesondere die linear verlaufende Führungskontur (51.1, 51.2) einen Winkel β zur Außenkarosserie (5) des Kraftfahrzeuges aufweist, an der die Vorrichtung angebracht ist, wobei der Winkel β zwischen 1° ≤ β <_ 45°, insbesondere zwischen 10° ≤ β <_ 35° liegt.

4. Vorrichtung nach einem der vorhergehenden Ansprüche,
**dadurch gekennzeichnet,**
**dass** sowohl in der Schließstellung (1) als auch in der Offenstellung (2) die Außenfläche (31) des Deckelelements (30) im Wesentlichen vertikal zur Fahrzeugkarosserie (5) ausgerichtet ist.

5. Vorrichtung nach einem der Ansprüche 2 bis 4,
**dadurch gekennzeichnet,**
**dass** der Schwenkarm (52) an einer ersten Welle (57) angeordnet ist, die über einen Elektromotor (59) antreibbar ist, insbesondere der Schwenkarm (52) mit der ersten Welle (57) ein gemeinsames Bauteil bilden.

6. Vorrichtung nach einem der Ansprüche 2 bis 5,
**dadurch gekennzeichnet,**
**dass** der Schwenkarm (52) L-förmig ausgeführt ist.

7. Vorrichtung nach einem der vorhergehenden Ansprüche,
**dadurch gekennzeichnet,**
**dass** ein Montageelement (70) vorgesehen ist, das rückseitig mehrere Befestigungsbereiche (90) aufweist, an denen die Kameraeinheit (10) und der Antrieb (50), insbesondere der Elektromotor (59) und die Welle (57, 58) angeordnet sind.

8. Vorrichtung nach einem der vorhergehenden Ansprüche mit Anspruch 5,
**dadurch gekennzeichnet,**
**dass** eine Positionserfassung (80) vorgesehen ist, die zumindest die Schließstellung (1) und die Offenstellung (2) des Deckelelements (30) erkennt, wobei entsprechend der Schließstellung (1) und die Offenstellung (2) der Elektromotor (59) aktiviert und/oder deaktiviert wird, wobei insbesondere die Positionserfassung (80) zumindest einen Geber (81.1, 81.2) aufweist, dessen Position von einem Sensor (82.1, 82.2) oder einem Schalter (82.1, 82.2) erkannt wird, wobei insbesondere der Geber (81.1, 81.2) an der ersten Welle (57) angeordnet ist.

9. Vorrichtung nach Anspruch 8,
**dadurch gekennzeichnet,**
**dass** zwei Geber (81.1, 81.2) angeordnet sind, deren Position von jeweils einem Sensor (82.1, 82.2) oder einem Schalter (82.1, 82.2) erkannt wird.

10. Vorrichtung nach einem der Ansprüche 8 oder 9,
**dadurch gekennzeichnet,**
**dass** die Positionserfassung (80) eine Steuereinheit (83) umfasst, die zeitlich den Antrieb (50) für die Öffnungsbewegung und Schließbewegung des Deckelelementes (30) ansteuert und/oder über die Stromaufnahme des Motors (59) erkennt, wann die Offenstellung (1) und die Schließstellung (2) erreicht ist.

11. Vorrichtung nach einem der vorhergehenden Ansprüche mit Anspruch 5,
**dadurch gekennzeichnet,**
**dass** die erste Welle (58) ein erstes Verzahnungselement (61) aufweist, das auf ein zweites Verzahnungselement (62) einer zweiten Welle (58) wirkt, wobei die zweite Welle (58) im Wesentlichen parallel zur ersten Welle (57) verläuft, wobei insbesondere die zweite Welle (58) ein drittes Verzahnungselement (63) aufweist, das mit einem vierten Verzahnungselement (64), insbesondere mit einem Spindelelement (64) zusammenwirkt, das durch den Elektromotor (59) angetrieben wird.

12. Vorrichtung nach einem der vorhergehenden Ansprüche mit Anspruch 5 und 7,
**dadurch gekennzeichnet,**
**dass** die Befestigungsbereiche (90) gleichzeitig als Lagerung der ersten (57) und/oder der zweiten Welle (58) ausgebildet sind.

13. Vorrichtung nach einem der vorhergehenden Ansprüche mit Anspruch 2 und 7,
**dadurch gekennzeichnet,**
**dass** die Befestigungsbereiche (90) und/oder die Führungskontur (51.2, 51.2) einstückig mit dem Montageelement (70) verbunden sind, insbesondere das Montageelement (70) mit den Befestigungsbereichen (90) und/oder der Führungskontur (51.2, 51.2) ein gemeinsames Bauteil bilden.

14. Vorrichtung nach einem der vorhergehenden Ansprüche mit Anspruch 7,
**dadurch gekennzeichnet,**
**dass** das Montageelement (70) Befestigungsmittel (71) aufweist, die zur Befestigung an der Karosserie (5) des Fahrzeuges dienen, wobei das Montageelement (70) von außen durch den Monteur an der Karosserie (5) befestigbar ist.

15. Vorrichtung nach einem der vorhergehenden Ansprüche mit Anspruch 7,
**dadurch gekennzeichnet,**
**dass** eine Abdeckung (100) rückseitig am Montageelement (70) angeordnet ist, die im Wesentlichen die Bestandteile des Antriebes (50) und der Kameraeinheit (10) abdeckt und/oder abdichtet, wobei insbesondere die Abdeckung (100) an ihrer dem Montageelement (70) zugewandten Innenseite (101) eine Kontur (102) aufweist, die als Lagerung für zumindest ein Element des Antriebes (50) oder der Kameraeinheit (10) dienen.

16. Vorrichtung nach einem der vorhergehenden Ansprüche mit Anspruch 7,
**dadurch gekennzeichnet,**
**dass** die Kameraeinheit (10) unbeweglich am Montageelement (70) befestigt ist.

## Claims

1. Device, comprising a camera unit (10), which is used to record images of the exterior area of a motor vehicle, and a cover element (30), which can be moved from a closed position (1) to an open position (2) by means of a drive (50), wherein the camera unit (10) is behind the cover element (30) and inaccessible from outside in the closed position (1) of the cover element (30) and images can be recorded in the open position (2) of the cover element (30),
**characterized in that**
the cover element (30) has an outer surface (31) facing away from the camera unit (10), and the drive (50) interacts with a mechanism in such a way that the outer surface (31) is always in the exterior area (6) of the motor vehicle in each position of the cover element (30) wherein the mechanism is designed in such a way that, during the movement of the cover element (30) from the closed position (1) to the open position (2) in a first movement phase (3), the cover element (30) moves away from the motor vehicle and simultaneously swivels around at least one axis (55, 56), and that, 34 in a second movement phase (4), the cover element (30) is pulled towards the motor vehicle and specifically simultaneously swivels back around at least one axis (55, 56).

2. Device according to Claim 1,
**characterized in that**
the mechanism comprises at least one guide contour (51) and at least one swivel arm (52), with the cover element (30) being attached with its rear on the guide contour (51.1, 51.2) and on the swivel arm (52), wherein specifically the cover element (30) comprises on its rear side a first connection element (53.1, 53.2) and/or a second connection element (54.1, 54.2), with at least one connection element (53, 54) being movably supported on the guide contour (51.1, 51.2) and/or the swivel arm (52).

3. Device according to Claim 2,
**characterized in that**
the guide contour (51.1, 51.2) is linear and/or arc-shaped, at least in sections, wherein in particular the guide contour (51.1, 51.2) with a linear shape forms an angle β with the outer body (5) of the motor vehicle to which the device is attached, with the angle β being between 1° < β < 45°, specifically between 10° < β < 35°.

4. Device according to any one of the preceding Claims,
**characterized in that**
in the closed position (1) as well as in the open position (2), the outer surface (31) of the cover element (30) is aligned essentially vertically in relation to the motor vehicle body (5).

5. Device according to Claims 2 to 4,
**characterized in that**
the swivel arm (52) is arranged on a first shaft (57) that can be driven by an electric motor (59), and specifically that the swivel arm (52) forms a common component with the first shaft (57).

6. Device according to Claims 2 to 5,
**characterized in that**
the swivel arm (52) is L-shaped.

7. Device according to any one of the preceding Claims, **characterized in that** an assembly element (70) is provided that comprises, on its rear side, several attachment areas (90) on which the camera unit (10) and the drive (50), specifically the electric motor (59) and the shaft (57, 58), are arranged.

8. Device according to any one of the preceding Claims with Claim 5,
**characterized in that**
a position detection system (80) is provided that detects at least the closed position (1) and the open position (2) of the cover element (30), with the electric motor (59) being activated and/or deactivated depending on the closed position (1) and the open position (2), wherein in particular the position detection system (80) comprises at least one transmitter (81.1, 81.2) whose position is detected by a sensor (82.1, 82.2) or a switch (82.1, 82.2), with specifically the transmitter (81.1, 81.2) being arranged on the first shaft (57).

9. Device according to Claim 8,
**characterized in that**
two transmitters (81.1, 81.2) are provided whose position is detected by a sensor (82.1, 82.2) each or a switch (82.1, 82.2) each.

10. Device according to Claims 8 or 9
**characterized in that**
the position detection system (80) comprises a control unit (83) that controls, with reference to time, the drive (50) for the opening movement and the closing movement of the cover element (30) and/or detects by means of the power consumption of the motor (59) when the open position (1) and the closed position (2) are reached.

11. Device according to any one of the preceding Claims with Claim 5,
**characterized in that**
the first shaft (58) comprises a first gear element (61) that acts on a second gear element (62) of a second shaft (58), with the second shaft (58) arranged essentially parallel to the first shaft (57), wherein in particular the second shaft (58) has a third gear element (63) that interacts with a fourth gear element (64), specifically with a spindle element (64), that is driven by the electric motor (59).

12. Device according to any one of the preceding Claims with Claims 5 and 7,
**characterized in that**
the attachment areas (90) are designed to simultaneously serve as support of the first (57) and/or the second shaft (58).

13. Device according to any one of the preceding Claims with Claims 2 and 7,
**haracterized in that**
the attachment areas (90) and/or the guide contour (51.1, 51.2) are joined as one piece with the assembly element (70), and that specifically the assembly element (70) forms a common component with the attachment areas (90) and/or the guide contour (51.1, 51.2).

14. Device according to any one of the preceding Claims with claim 7,
**characterized in that**
the assembly element (70) comprises attachment means (71) that serve for the attachment to the body (5) of the motor vehicle, with the assembly element (70) being attachable from the outside on the vehicle body (5) by the installation person.

15. Device according to any one of the preceding Claims with Claim 7,
**characterized in that**
a cover (100) is arranged on the rear side of the assembly element (70) that essentially covers and/or seals off the components of the drive (50) and the camera unit (10)., wherein in particular the cover (100), on its inner surface (101) facing the assembly element (70), comprises a contour (102) that serves as support for at least one element of the drive (50) or the camera unit (10).

16. Device according to any one of the preceding Claims, **characterized in that** the camera unit (10) is attached immovably on the assembly element (70).

## Revendications

1. Dispositif comprenant une unité caméra (10) qui sert à l'acquisition d'images de la zone extérieure d'un véhicule automobile et un élément couvercle (30) qui peut être déplacé, au moyen d'une unité d'entraînement (50), d'une position fermée (1) dans une position ouverte (2), dans lequel
lorsque l'élément couvercle (30) est dans la position fermée (1), l'unité caméra (10) se trouve derrière l'élément couvercle (30) et n'est pas accessible de l'extérieur et
lorsque l'élément couvercle (30) est dans la position ouverte (2), il est possible d'effectuer l'acquisition d'images,
**caractérisé en ce**
**que** l'élément couvercle (30) présente une surface extérieure (31) opposée à l'unité caméra (10) et l'unité d'entraînement (50) coopère avec un mécanisme d'un type tel que, pendant le déplacement de l'élément couvercle (30) entre la position fermée (1) et la position ouverte (2), la surface extérieure (31), dans chaque position de l'élément couvercle (30), se trouve toujours dans la zone extérieure (6) du véhicule automobile, le mécanisme étant conçu de telle sorte que, pendant le déplacement de l'élément couvercle (30) de la position fermée (1) dans la position ouverte (2),
dans une première phase de déplacement (3), l'élément couvercle (30) s'éloigne du véhicule et, en même temps, pivote autour d'au moins un axe (55, 56) et
dans une deuxième phase de déplacement (4), l'élément couvercle (30) est rapproché du véhicule et, en particulier en même temps, pivote en retour autour d'au moins un axe (55, 56).

2. Dispositif selon la revendication 1,
**caractérisé en ce**
**que** le mécanisme présente au moins un contour de guidage (51) et au moins un bras pivotant (52), l'élément couvercle (30) étant fixé du côté arrière au contour de guidage (51.1, 51.2) et au bras pivotant (52), l'élément couvercle (30) présentant en particulier du côté arrière un premier élément de liaison (53.1, 53.2) et/ou un deuxième élément de liaison (54.1, 54.2), au moins un élément de liaison (53, 54) étant monté mobile sur le contour de guidage (51.1, 51.2) et/ou le bras pivotant (52).

3. Dispositif selon la revendication 2,
**caractérisé en ce**
**que** le contour de guidage (51.1, 51.2) est linéaire et/ou, au moins dans certaines zones, arqué, le contour de guidage (51.1, 51.2) linéaire présentant en particulier un angle β par rapport à la carrosserie extérieure (5) du véhicule automobile sur laquelle le dispositif est monté, l'angle β étant tel que 1° ≤ β ≤ 45°, en particulier tel que 10° ≤ β ≤ 35°.

4. Dispositif selon l'une des revendications précédentes,
**caractérisé en ce**
**qu'**aussi bien dans la position fermée (1) que dans la position ouverte (2), la surface extérieure (31) de l'élément couvercle (30) est orientée sensiblement verticalement par rapport à la carrosserie de véhicule (5).

5. Dispositif selon l'une des revendications 2 à 4,
**caractérisé en ce**
**que** le bras pivotant (52) est disposé sur un premier arbre (57) qui peut être entraîné par un moteur électrique (59), en particulier le bras pivotant (52) formant avec le premier arbre (57) un élément commun.

6. Dispositif selon l'une des revendications 2 à 5,
**caractérisé en ce**
**que** le bras pivotant (52) est réalisé en forme de L.

7. Dispositif selon l'une des revendications précédentes,
**caractérisé en ce**
**qu'**un élément de montage (70) est prévu, qui présente du côté arrière plusieurs zones de fixation (90) sur lesquelles l'unité caméra (10) et l'unité d'entraînement (50), en particulier le moteur électrique (59) et l'arbre (57, 58), sont disposés.

8. Dispositif selon l'une des revendications précédentes avec la revendication 5,
**caractérisé en ce**
**qu'**une détection de position (80) est prévue, qui détecte au moins la position fermée (1) et la position ouverte (2) de l'élément couvercle (30), le moteur électrique (59) étant activé et/ou désactivé de façon correspondante à la position fermée (1) et à la position ouverte (2), en particulier la détection de position (80) présentant au moins un transmetteur (81.1, 81.2) dont la position est détectée par un capteur (82.1, 82.2) ou un commutateur (82.1, 82.2), le transmetteur (81.1, 81.2) étant en particulier disposé sur le premier arbre (57).

9. Dispositif selon la revendication 8,
**caractérisé en ce**
**que** deux transmetteurs (81.1, 81.2) sont disposés, dont les positions sont détectées par des capteurs (82.1, 82.2) ou des commutateurs (82.1, 82.2) respectifs.

10. Dispositif selon l'une des revendications 8 ou 9,
**caractérisé en ce**
**que** la détection de position (80) comprend une unité de commande (83) qui commande dans le temps l'unité d'entraînement (50) pour le mouvement d'ouverture et le mouvement de fermeture de l'élément couvercle (30) et/ou détecte, au moyen de la consommation de courant du moteur (59), quand la position ouverte (1) et la position fermée (2) sont atteintes.

11. Dispositif selon l'une des revendications précédentes avec la revendication 5,
**caractérisé en ce**
**que** le premier arbre (58) présente un premier élément d'engrènement (61) qui agit sur un deuxième élément d'engrènement (62) d'un deuxième arbre (58), le deuxième arbre (58) s'étendant sensiblement parallèlement au premier arbre (57), en particulier le deuxième arbre (58) présentant un troisième élément d'engrènement (63) qui coopère avec un quatrième élément d'engrènement (64), en particulier avec un élément broche (64) qui est entraîné par le moteur électrique (59).

12. Dispositif selon l'une des revendications précédentes avec les revendications 5 et 7,
**caractérisé en ce**
**que** les zones de fixation (90) sont conçues en même temps comme palier pour le premier (57) et/ou le deuxième arbre (58).

13. Dispositif selon l'une des revendications précédentes avec les revendications 2 et 7,
**caractérisé en ce**
**que** les zones de fixation (90) et/ou le contour de guidage (51.2, 51.2) sont reliés d'un seul tenant avec l'élément de montage (70), en particulier l'élément de montage (70) formant avec les zones de fixation (90) et/ou le contour de guidage (51.2, 51.2) un élément commun.

14. Dispositif selon l'une des revendications précédentes avec la revendication 7,
**caractérisé en ce**
**que** l'élément de montage (70) présente des moyens de fixation (71) qui servent à la fixation à la carrosserie (5) du véhicule, l'élément de montage (70) pouvant être fixé à la carrosserie (5) depuis l'extérieur par le monteur.

15. Dispositif selon l'une des revendications précédentes avec la revendication 7,
**caractérisé en ce**
**qu'**un élément de recouvrement (100) est disposé du côté arrière sur l'élément de montage (70), qui recouvre et/ou étanchéifie sensiblement les éléments constitutifs de l'unité d'entraînement (50) et de l'unité caméra (10), en particulier l'élément de recouvrement (100) présentant sur son côté intérieur (101) tourné vers l'élément de montage (70) un contour (102) qui sert de palier à au moins un élément de l'unité d'entraînement (50) ou de l'unité caméra (10).

16. Dispositif selon l'une des revendications précédentes avec la revendication 7,
**caractérisé en ce**
**que** l'unité caméra (10) est fixée de manière immobile sur l'élément de montage (70).
